Europäisches Patentamt

European Patent Office

Office européen des brevets

(19)

(11) **EP 1 482 463 A1**

(12) **EUROPEAN PATENT APPLICATION**
published in accordance with Art. 158(3) EPC

(43) Date of publication:
**01.12.2004 Bulletin 2004/49**

(21) Application number: **03743560.9**

(22) Date of filing: **03.03.2003**

(51) Int Cl.⁷: **G08B 5/36**, G06F 3/00

(86) International application number:
**PCT/JP2003/002438**

(87) International publication number:
**WO 2003/075239 (12.09.2003 Gazette 2003/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **04.03.2002 JP 2002056949**

(71) Applicant: **MATSUSHITA ELECTRIC INDUSTRIAL CO., LTD.**
**Kadoma-shi, Osaka 571-8501 (JP)**

(72) Inventors:
• **IKEDA, Takumi**
  **Kobe-shi, Hyogo 651-0053 (JP)**

• **YAMAMOTO, Naoaki**
  **Ota-ku, Tokyo 144-0046 (JP)**
• **WATANABE, Kazuhisa**
  **Yokohama-shi, Kanagawa 226-0013 (JP)**
• **TAKASE, Hiroshi**
  **Matsudo-shi, Chiba 271-0045 (JP)**
• **YAMAMOTO, Tatsuo**
  **Fujisawa-shi, Kanagawa 251-0002 (JP)**
• **KOSHIBA, Keiichi**
  **Miura-gun, Kanagawa 240-0112 (JP)**

(74) Representative: **Grünecker, Kinkeldey, Stockmair & Schwanhäusser Anwaltssozietät**
**Maximilianstrasse 58**
**80538 München (DE)**

(54) **OPTICAL OUTPUT DEVICE, INFORMATION PROCESSING TERMINAL, RELAY DEVICE, AND PROGRAM CONTROLLING THE OPTICAL OUTPUT DEVICE**

(57)     An information processing terminal stores beforehand an originator identifier for identifying the information processing terminal itself, and transmits external information including the originator identifier. An optical output unit receives the external information transmitted from the information processing terminal, and produces one mode of optical output among three or more output modes under a multistage control according to the external information. The optical output unit thus outputs softly the external information obtained by the information processing terminal.

FIG. 1

# Description

## TECHNICAL FIELD

The present invention relates to an optical output unit, an information processing terminal and a repeater unit of an information processing system used for communicating softly a condition and the like of one user to another user of this system by means of optical output. The invention also relates to a program for controlling the optical output unit.

## BACKGROUND ART

There exist various apparatuses such as mobile phones, computers connected through the Internet, and the like for communicating information from one person to another.

Because of the advancement of the Internet, broadband technology and the like, many of these apparatuses are now capable of communicating continuously through always-on connections.

However, it is not possible to learn softly an up-to-the-minute condition or a state of a specific individual (a loved one, a family member, or the like), for instance, by using the conventional techniques. Also, it is not possible to softly convey a condition or a state of an individual to another individual. The expressions of "learning softly" and "conveying softly" do not mean that one person knows busyness of the other over a telephone conversation, or one conveys to the other how he/she is working by way of an e-mail through the Internet. More concretely, these expressions of "learning softly" and "conveying softly" rather mean that one person finds the other person as being somewhat busy, or one person conveys to the other that he/she is on the way to visit her/him.

In other words, although one can convey his/her condition positively by using a mobile phone or the e-mail system, he/she cannot do so without being conscious of expressing the condition in a form of message. There is no system that can sense a condition or state of a person and convey it softly to another party in rather not a positive manner or in spite of the person's positive intention.

## SUMMARY OF THE INVENTION

An information processing terminal, a repeater unit and an optical output unit of the present invention compose an information processing system, which transmits external information obtained by the information processing terminal to the optical output unit via the repeater unit, and displays it in a form of optical output. The information processing terminal has any of an originator identifier representing a data to identify the information processing terminal and a destination identifier that identifies a destination of the external information stored in advance in a storage unit. The information processing terminal transmits any of the originator identifier and the destination identifier stored therein together with the external information. The repeater unit has an external information receiver, a transmission management information storage, a destination identifier acquirer and an external information transmitter. The external information receiver receives one of the originator identifier and the destination identifier together with the external information from the information processing terminal. The transmission management information storage stores therein transmission management information which is a combination of the destination identifier for identifying a destination of the external information and the originator identifier. The destination identifier acquirer obtains from the transmission management information storage the destination identifier belonging to the same combination with the originator identifier received by the external information receiver. The external information transmitter transmits the external information received by the external information receiver to the destination identified by the destination identifier obtained from the destination identifier acquirer. On the other hand, the repeater unit has an external information receiver and an external information transmitter. The external information receiver receives the external information along with the destination identifier that identifies the destination of the external information. The external information transmitter then transmits the external information received by the external information receiver to the destination identified by the destination identifier. The optical output unit has an external information receiver, an optical output device and an optical output controller. The external information receiver receives the external information representing information transmitted from the outside thereof. The optical output device outputs light. The optical output controller performs multistage control in which it controls the optical output device to produce at least one mode of optical output among three or more different modes of the optical output according to the external information.

In this information processing system, the repeater unit may be omitted so that the information processing terminal and the optical output unit communicate the external information directly with respect to each other, and the optical output unit produces the optical output according to the external information.

## BRIEF DESCRIPTION OF THE DRAWINGS

Fig. 1 is a block diagram of an information processing system according to a first exemplary embodiment of the present invention;
Fig. 2 is a flow chart illustrating operation of an information processing terminal according to the first exemplary embodiment of this invention;

Fig. 3 is a flow chart illustrating operation of a repeater unit according to the first exemplary embodiment of this invention;

Fig. 4 is a flow chart illustrating operation of an optical output unit according to the first exemplary embodiment of this invention;

Fig. 5 is a schematic view showing an external appearance of the information processing terminal and the optical output unit of the first exemplary embodiment of this invention;

Fig. 6 is a schematic illustration showing an operational concept of the information processing system according to the first exemplary embodiment of this invention;

Fig. 7 is a table showing an example of external information according to the first exemplary embodiment of this invention;

Fig. 8 is a table showing an example of information used for controlling optical output according to the first exemplary embodiment of this invention;

Fig. 9 is a schematic illustration showing an example of optical output according to the first exemplary embodiment of this invention;

Fig. 10 is a table showing examples of information for optical output control according to the first exemplary embodiment of this invention;

Fig. 11 is a schematic view showing an example of the optical output according to the first exemplary embodiment of this invention;

Fig. 12 is a schematic view showing another example of the optical output according to the first exemplary embodiment of this invention;

Fig. 13 is a block diagram of an information processing system according to a second exemplary embodiment of this invention;

Fig. 14 is a flow chart illustrating operation of an information processing terminal according to the second exemplary embodiment of this invention;

Fig. 15 is a flow chart illustrating operation of an optical output unit according to the second exemplary embodiment of this invention;

Fig. 16 is a schematic illustration showing a concept of the information processing system according to the second exemplary embodiment of this invention;

Fig. 17 shows a configuration example of pressure data according to the second exemplary embodiment of this invention;

Fig. 18 shows an example of the pressure data according to the second exemplary embodiment of this invention;

Fig. 19 is a table showing an example of location information according to the second exemplary embodiment of this invention;

Fig. 20 is a table showing an example of external information according to the second exemplary embodiment of this invention;

Fig. 21 is a schematic view showing an example of external appearance of the optical output unit according to the second exemplary embodiment of this invention;

Fig. 22 is a schematic view showing how the optical output unit illuminates according to the second exemplary embodiment of this invention;

Fig. 23 is a block diagram of an information processing system according to a third exemplary embodiment of this invention;

Fig. 24 is a flow chart illustrating operation of an optical output unit according to the third exemplary embodiment of this invention;

Fig. 25 shows a control table for optical output according to the third exemplary embodiment of this invention;

Fig. 26 is a table showing data that compose a menu for selecting an identifier of an optical output control method according to the third exemplary embodiment of this invention;

Fig. 27 is a diagram representing a setting panel for mode data and optical output method identifiers according to the third exemplary embodiment of this invention;

Fig. 28 is a schematic illustration showing a concept of the information processing system according to the third exemplary embodiment of this invention is shown;

Fig. 29 is a block diagram of an information processing system according to a fourth exemplary embodiment of this invention;

Fig. 30 is a flow chart illustrating an operation of an information processing terminal according to the fourth exemplary embodiment of this invention;

Fig. 31 is a flow chart illustrating operation of an optical output unit according to the fourth exemplary embodiment of this invention;

Fig. 32 is a table showing an example of historical data according to the fourth exemplary embodiment of this invention;

Fig. 33 is a schematic view showing how the optical output unit produces an output of light according to the fourth exemplary embodiment of this invention;

Fig. 34 is a schematic view showing a structural example of the optical output unit according to the fourth exemplary embodiment of this invention;

Fig. 35 is a schematic view showing another structural example of the optical output unit according to the fourth exemplary embodiment of this invention;

Fig. 36 is a block diagram of an information processing system according to a fifth exemplary embodiment of this invention;

Fig. 37 is a flow chart illustrating operation of an information processing terminal according to the fifth exemplary embodiment of this invention;

Fig. 38 is a block diagram of an information processing system according to a sixth exemplary embodiment of this invention;

Fig. 39 is a flow chart illustrating operation of an information processing terminal according to the sixth exemplary embodiment of this invention;

Fig. 40 is a flow chart illustrating operation of an optical output unit according to the sixth exemplary embodiment of this invention;

Fig. 41 is a schematic view showing an example of communicating positional information according to the sixth exemplary embodiment of this invention;

Fig. 42 shows a distance management table according to the sixth exemplary embodiment of this invention;

Fig. 43 is a block diagram of an information processing system according to a seventh exemplary embodiment of this invention;

Fig. 44 is a flow chart illustrating operation of an information processing terminal according to the seventh exemplary embodiment of this invention;

Fig. 45 is a schematic view showing a configuration example of the information processing system according to the seventh exemplary embodiment of this invention;

Fig. 46 is a table showing an example of information kept by a health condition data acquiring means according to the seventh exemplary embodiment of this invention;

Fig. 47 shows an example of external information according to the seventh exemplary embodiment of this invention;

Fig. 48 is a block diagram of an information processing system according to an eighth exemplary embodiment of this invention;

Fig. 49 is a flow chart illustrating operation of an information processing terminal according to the eighth exemplary embodiment of this invention;

Fig. 50 is a block diagram of an information processing system according to a ninth exemplary embodiment of this invention;

Fig. 51 is a flow chart illustrating operation of an information processing terminal according to the ninth exemplary embodiment of this invention;

Fig. 52 is a schematic illustration showing a concept of the information processing system according to the ninth exemplary embodiment of this invention;

Fig. 53 is a block diagram of an information processing system according to a tenth exemplary embodiment of this invention;

Fig. 54 is a flow chart illustrating operation of an information processing terminal according to the tenth exemplary embodiment of this invention;

Fig. 55 is a schematic illustration showing a concept of the information processing system according to the tenth exemplary embodiment of this invention;

Fig. 56 is a block diagram of an information processing system according to an eleventh exemplary embodiment of this invention; and

Fig. 57 is a flow chart illustrating operation of an information processing terminal according to the eleventh exemplary embodiment of this invention.

## DETAILED DESCRIPTION OF PREFERRED EMBODIMENTS

Description will be provided hereinafter of exemplary embodiments of the present invention with reference to the accompanying drawings. Like reference numerals are used throughout to designate components of like structure, and detailed descriptions of them will not be repeated.

(First Exemplary Embodiment)

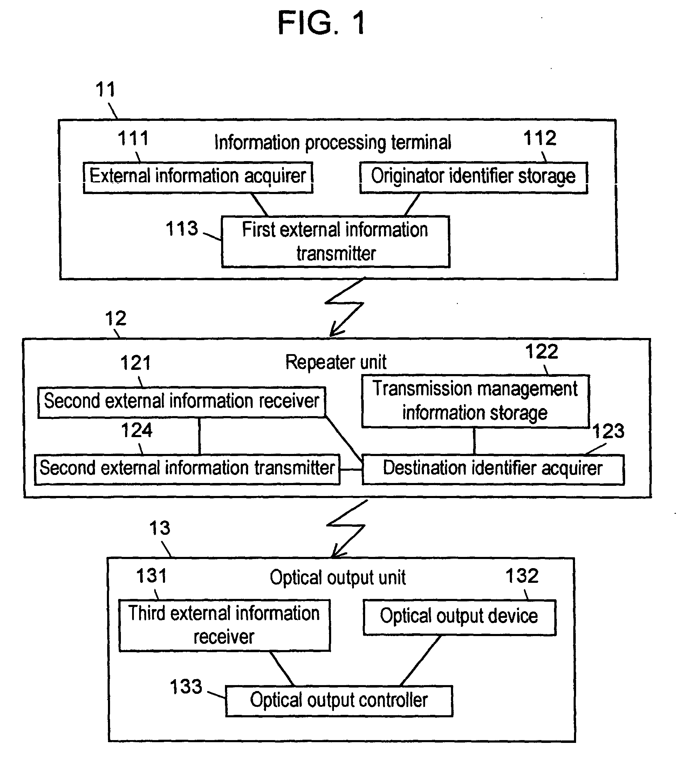

Fig. 1 is a block diagram of an information processing system according to this exemplary embodiment.

This information processing system has information processing terminal 11 (hereinafter referred to as "terminal"), repeater unit 12 and optical output unit 13. Terminal 11 obtains external information representing a data that indicates a condition of a user who carries terminal 11, and transmits the external information. Repeater unit 12 receives the external information from terminal 11, and transmits the external information to optical output unit 13. Optical output unit 13 receives the external information from repeater unit 12, and produces optical output according to the external information.

Terminal 11 has external information acquirer 111 (hereinafter referred to as "acquirer"), originator identifier storage 112 (referred to as "storage") and first external information transmitter 113 (referred to as "transmitter").

Acquirer 111 obtains the external information representing the data indicating the condition of the user of terminal 11. The external information may be a data relating to any condition of the user. Examples of the external information include a speed data at which the user taps a keyboard (that means information indicating busyness with work), location information indicating a geological location where the user (or, the terminal) is located, positional information indicating a place where the user (or, the terminal) is placed, a pressure data indicating a force with which the terminal is grasped, information indicating a cardiac rate of the user, information indicating a body temperature of the user, information indicating an amount of movement when the terminal is shaken (or an angle data showing a change in angle of the terminal), and the like, among various conditions of the user. A structure of acquirer 111 differs due to the external information to be obtained. Concrete structures of acquirer 111 will be described in more detail in the second and subsequent exemplary embodiments.

Storage 112 stores an originator identifier representing a data which identifies terminal 11. Storage 112 is materialized with a storage medium such as a semiconductor memory, a hard disk, a CD-ROM and the like. It is usually composed of a nonvolatile memory, although a volatile memory may even be used. The originator identifier may be any data that can identify the transmitting terminal, and an example is an IP address assigned to terminal 11. When the technique of Internet Protocol Version 6 becomes widely used so that many apparatuses carry IP addresses, mutual communications among those apparatuses become a reality. The originator identifier may also be a user ID (e.g., a mail address) of the user of terminal 11. In addition, the originator identifier may be a telephone number if terminal 11 is a mobile phone.

Transmitter 113 transmits the originator identifier stored in storage 112 together with the external information obtained by acquirer 111. Although transmitter 113 is composed of a communication device, it may be realized with a broadcasting apparatus. A method of communication may either be wireless communications or cable communications. The external information to be transmitted usually determines the method as to which is suitable between the wireless communications and cable communications.

Repeater unit 12 has second external information receiver 121 (referred to as "receiver"), transmission management information storage 122 ("storage"), destination identifier acquirer 123 ("acquirer"), and second external information transmitter 124 ("transmitter").

Receiver 121 receives the external information and the originator identifier for identifying the transmitting terminal of the external information. Although receiver 121 is composed of a wireless or cable communication device, it may be materialized with an apparatus for receiving broadcasting signals.

Storage 122 stores at least one combination of transmission management information which includes a pair of destination identifier for identifying a destination of the external information and originator identifier. Although storage 122 is normally composed of a nonvolatile memory such as a hard disk, it may be materialized with a volatile memory. Furthermore, the transmission management information needs not be limited to a one-to-one combination of destination identifier and originator identifier, but it may be any of n-to-1 combination and n-to-n combination.

Acquirer 123 retrieves from storage 122 one or more destination identifiers that compose a combination with the originator identifier received by receiver 121. Acquirer 123 is normally materialized with software, but it may be composed of a specially designed circuit (i.e., hardware).

Transmitter 124 transmits the external information received by receiver 121 to a destination identified by the destination identifier retrieved through acquirer 123. Although transmitter 124 is composed of a wireless or cable communication device (e.g., a modem with driver software and the like), it may be realized with a broadcasting apparatus.

Optical output unit 13 has third external information receiver 131 (referred to as "receiver"), optical output device 132 and optical output controller 133 ("controller").

Receiver 131 receives the external information. Although receiver 131 is composed of a wireless or cable communication device, it may be realized with an apparatus for receiving broadcasting signals (e.g., a tuner with driver software, and the like).

Optical output device 132 outputs light. It can be composed of any medium that produces optical output such as an LED, a miniature lamp, a liquid crystal display, a CRT, and the like. However, optical output device 132 needs to operate in three or more different modes, including an OFF state. In other words, it needs a capability of producing multilevel output of light (i.e., two or more output levels in addition to the OFF state). Any optical output medium that gives only two modes of ON and OFF states is not suitable for optical output device 132.

Controller 133 gives optical output device 132 a command according to the external information received by receiver 131, so as to make optical output device 132 produce one or more modes of optical output among the three or more modes of operating states (including the OFF state). This method of control is hereinafter called a multistage control. Although controller 133 is normally materialized with software programmed to control optical output device 132, it may be composed of hardware.

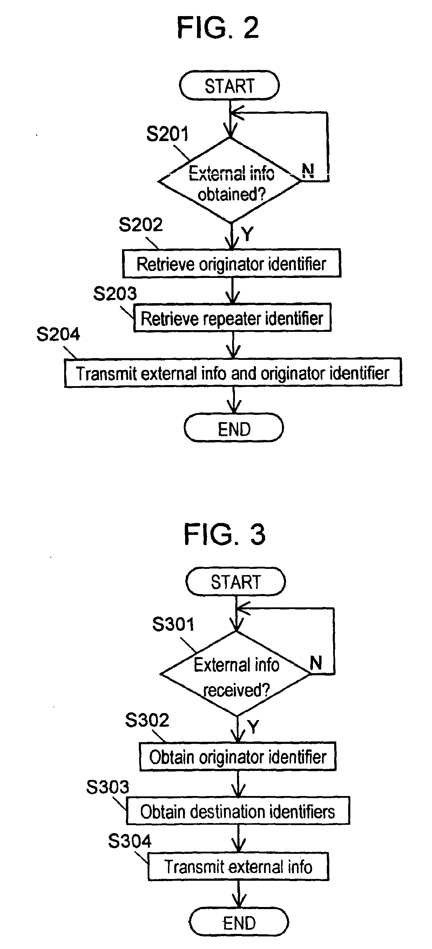

This information processing system operates in a manner which will be described hereinafter. Description is provided first of an operation of terminal 11 by referring to Fig. 2.

(S201) Acquirer 111 determines as to whether it obtained external information. The process advances to S202 if it has obtained external information, or the process remains in the step S201 for waiting external information if it has not obtained any external information.

(S202) Transmitter 113 retrieves an originator identifier from storage 112.

(S203) Transmitter 113 obtains a repeater identifier representing a data to identify repeater unit 12. The repeater identifier is stored in advance in a storage means not shown in the figure. The repeater identifier is the data needed to communicate with repeater unit 12, and it can be an IP address of repeater unit 12, for instance.

(S204) Transmitter 113 transmits the external information and the originator identifier to repeater unit 12 that is identified by the repeater identifier.

According to Fig. 2, although the external information is obtained without receiving a trigger, the above operation may be initiated by a trigger produced when a user of terminal 11 presses a start button or the like though not shown in the figure. Alternatively, the operation of obtaining the external information in the step of S201 may be initiated when terminal 11 receives a triggering signal from any of optical output unit 13, repeater unit 12 and other devices.

Referring to Fig. 3, description is provided next of an operation of repeater unit 12.

(S301) Receiver 121 determines whether or not it has received the external information and the originator identifier from terminal 11. The process advances to S302 if receiver 121 has received them, or the process remains in the step S301 for waiting reception if it has not.

(S302) Acquirer 123 obtains the originator identifier from the information received by receiver 121.

(S303) Acquirer 123 retrieves all destination identifiers each composing a combination with the originator identifier obtained in S302. Acquirer 123 may retrieve one destination identifier or more here.

(S304) Transmitter 124 transmits the external information received in S301 to a destination identified by each of the destination identifiers retrieved in S303. In this step, transmitter 124 may transmit the originator identifier along with the external information, or it may transmit only the external information.

According to Fig. 3, although repeater unit 12 transmits the external information by using the reception of the external information as a trigger, it may transmit the external information only when it receives a request of access from optical output unit 13.

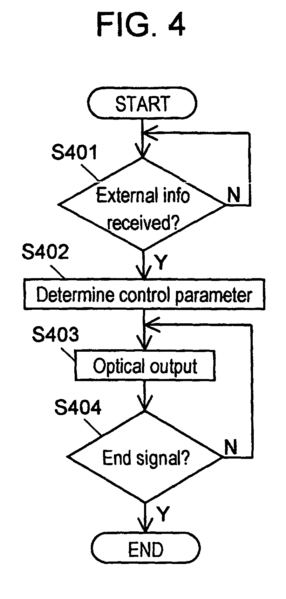

Description is provided next of an operation of optical output unit 13 with reference to Fig. 4.

(S401) Receiver 131 determines whether or not it received the external information. The process advances to S402 if it has received the external information, or the process remains in S401 for waiting reception if it has not.

(S402) Controller 133 determines a control parameter (including a data, a formula or the like) used for optical control according to the external information received in S401.

(S403) Optical output device 132 produces an optical output according to the control parameter determined in S402.

(S404) Controller 133 determines whether or not it receives an end signal from the outside. The process returns to S403 if it does not receive an end signal, or the process is terminated when it does. In other words, optical output device 132 terminates the optical output to cease lighting upon reception of the end signal.

In Fig. 4, although optical output unit 13 remains not active until it receives the external information, it may be rather designed to send directly or indirectly a command for urging any of terminal 11 and repeater unit 12 to transmit the external information.

Furthermore, optical output unit 13 of Fig. 4 may be so designed that it receives an originator identifier, and stores beforehand some originator identifiers for which it produces optical output (i.e., for which it responds). Controller 133 can thus control optical output device 132 in a manner so that it produces (or responds with) optical output only when the received originator identifier has a given relation to any of the originator identifiers stored therein. In other words, optical output unit 13 may be made customizable of the originator identifiers for which it produces (or responds with) the optical output.

Description is provided hereinafter of concrete operation of the information processing system, configurations and the like of the individual devices composing the system according to the present exemplary embodiment.

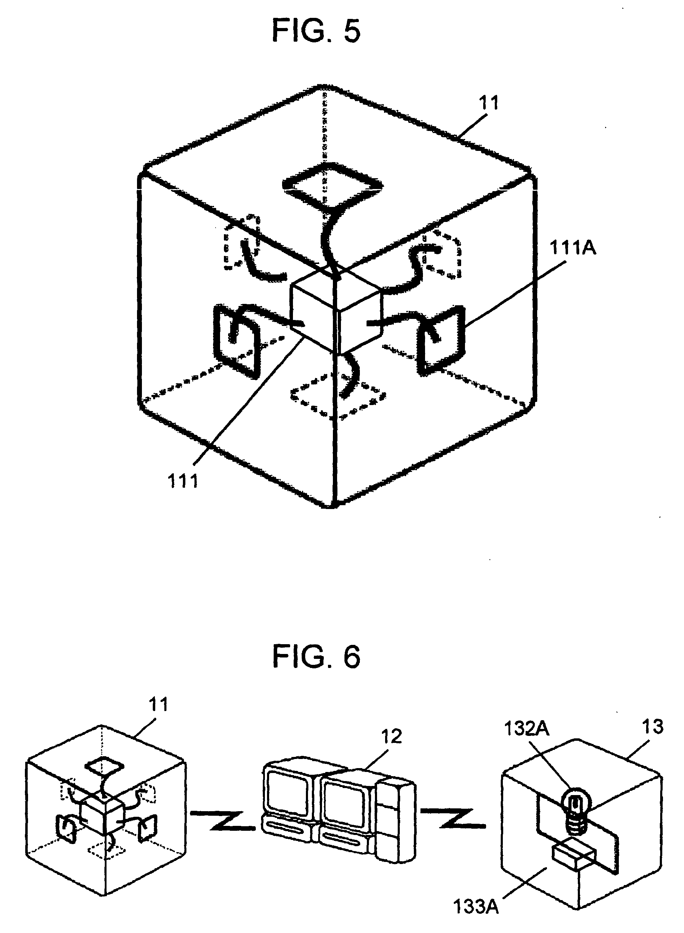

Terminal 11 and optical output unit 13 of this exemplary embodiment have regular hexahedral shapes (i.e., cubic shapes) respectively, as shown in Figs. 5 and 6. Terminal 11 is provided with a pressure sensor, from which external information acquirer 111 obtains a pressure data representing a grasping force when terminal 11 is grasped. In other words, the external information contains a pressure data, and acquirer 111 in this exemplary embodiment is a pressure data acquirer. As shown in Fig. 5, pressure sensor 111A is disposed to each of the six (6) surfaces of the cubic body. When the user grasps terminal 11, acquirer 111 obtains values measured by pressure sensors 111A on the six surfaces. Transmitter 113 transmits the external information to optical output unit 13 through repeater unit 12. Transmitter 113 may transmits the external information obtained by acquirer 111 after having it processed. The information being transmitted here is called "external information" since it is processed using the external information obtained by acquirer 111. Optical output unit 13 produces optical output according to the external information (refer to Fig. 6). In Fig. 6, voltage controller 133A controls a voltage according to the pressure data. In other words, optical output unit 13 normally produces light of high intensity when terminal 11 is grasped hard.

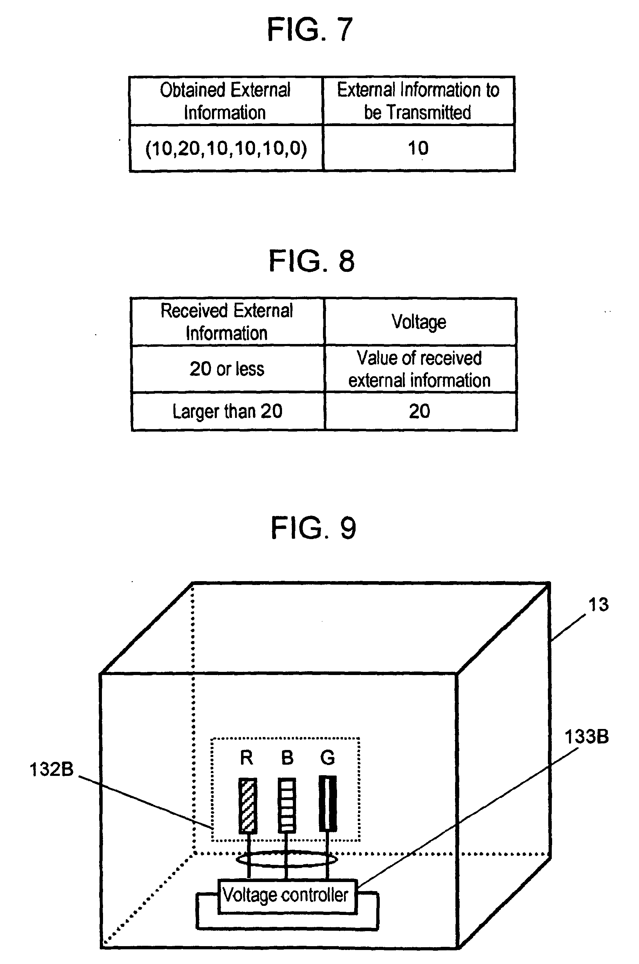

When the user grasps terminal 11, acquirer 111 reads six values from six pressure sensors 111A. Assume that these six values are 10, 20, 10, 10, 10 and 0 shown under the column titled "Obtained external information" in the table of Fig. 7. Terminal 11 calculates a mean value of these six values and transmits the mean value as "external information to be transmitted" to repeater unit 12. The external information to be transmitted in this example is "10". Optical output unit 13 thus receives the external information of "10", and produces optical output of a given intensity corresponding to it. In other words, the external information may take any form such as a raw data or a processed data using the obtained information. There is no specific limitation in the method of processing the information.

Optical output unit 13 has a structure including miniature lamp 132A connected to voltage controller 133A as shown in Fig. 6. Voltage controller 133A determines a voltage based on value "10" of the external information, and applies the voltage to miniature lamp 132A. Miniature lamp 132A thus lights up. In other words, optical output unit 13 produces bright light when the user grasps terminal 11 strongly, but optical output unit 13 produces dark dimming light when the user grasps terminal 11 gently. Optical output device 132 may be composed of an LED or the like instead of the miniature lamp.

Controller 133 in optical output unit 13 controls the optical output in a multistage level of intensity based on a relation between "received external information" and "voltage" shown in Fig. 8. In other words, controller 133 controls lighting intensity of miniature lamp 132A by applying the voltage of a value equivalent to that given by the external information when a value of "received external information" is 20V or less. On the contrary, it controls lighting intensity of miniature lamp 132A by applying the voltage of 20V when the value of "received external information" is larger than 20V Accordingly, controller 133 determines the intensity by choosing a voltage value among three different voltage levels including 0V, and the miniature lamp 132A produces optical output corresponding to that voltage.

Although the voltages of three different levels are provided, including 0V as discussed above, they may be increased to four or more levels by setting three or more threshold values. That is, controller 133 determines a level of the lighting intensity among three or more different levels, and optical output device 132 produces optical output corresponding to that parameter.

According to this exemplary embodiment as discussed above, terminal 11 transmits the external information representing a condition given by the user to optical output unit 13 through repeater unit 12, for production of optical output. As a result, optical output unit 13 can vaguely and softly convey a condition of the user of terminal 11 to a certain person. The person, who is informed of the given condition from the other party, can take a number of responsive actions. Specific examples of other external information and a variety of responsive actions will be described in detail in a second and the subsequent exemplary embodiments.

There is a meaning for conveying the condition of grasping terminal 11 to optical output unit 13 as described below. Assume that two individuals being in love with each other, for instance, have terminal 11 and optical output unit 13 respectively. One of them attempts to convey her/his desire of seeing the other by strongly grasping terminal 11. The other having optical output unit 13 can vaguely understand her/his feelings. The two intimate individuals can thus make soft communications between them in the manner as described above.

In this and all of the following exemplary embodiments, repeater unit 12 is not indispensable, and terminal 11 may transmit an external information and optical output unit 13 may receive the external information directly between them.

In this exemplary embodiment, terminal 11 transmits an originator identifier and repeater unit 12 receives the originator identifier, and repeater unit 12 obtains a destination identifier corresponding to the received originator identifier. However, terminal 11 may instead transmit the destination identifier to repeater unit 12. In this case, repeater unit 12 is so constructed as to operate in the following manner. That is, receiver 121 of repeater unit 12 receives a destination identifier for identifying a destination of the external information together with the external information. Transmitter 124 transmits the external information to the destination identified by the destination identifier received with the external information by receiver 121. Transmitter 124 may transmit the external information automatically, or it may transmit the external information when it receives a request of access to the external information from optical output unit 13. The above two types of repeater unit 12 are also suitable to establish all the exemplary embodiments described below.

Although controller 133 controls intensity of light based on the external information according to this exemplary embodiment, it may control the light in other methods. The other methods in which controller 133 controls the light include the following. That is, the optical output controller may give a command to optical output device 132 according to the external information, so that optical output device 132 outputs one color of light among three or more varieties of lighting color. More specifically, light source that composes optical output device 132 has a combination of three LED's of "red", "blue" and "green" as denoted by reference mark 132B shown in Fig. 9. Voltage controller 133B determines how high a voltage it applies to each of the three LED's to illuminate the three primary colors of "red", "blue" and "green" according to the external information received through receiver 131. In other words, it determines brightness of the three colors of light. Voltage controller 133B thus controls the color of the optical output by regulating lighting brightness of the three LED's.

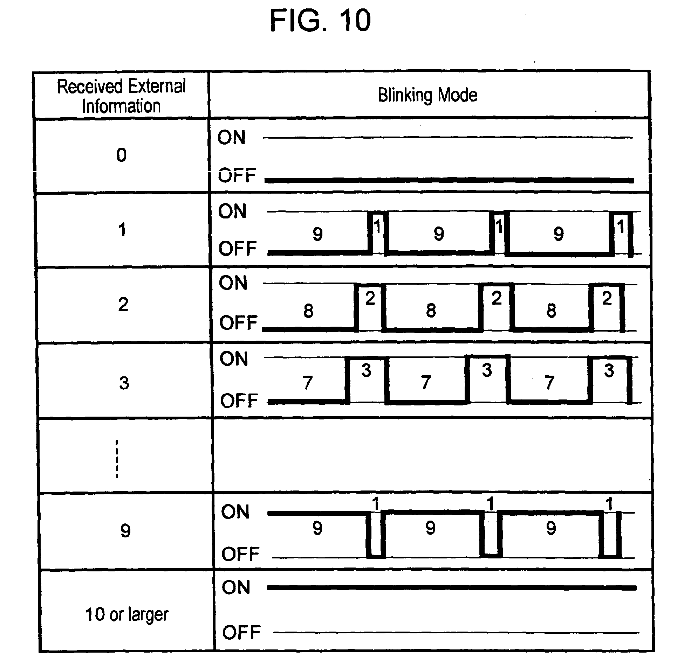

Furthermore, controller 133 may give a command to make optical output device produce optical output in one mode of blinking among three or more different modes of blinking. In other words, controller 133 manages information on "received external information" and "blinking modes", as shown in Fig. 10 for example. It then determines one of the patterns of turning on and off the miniature lamp 132A according to the received external information.

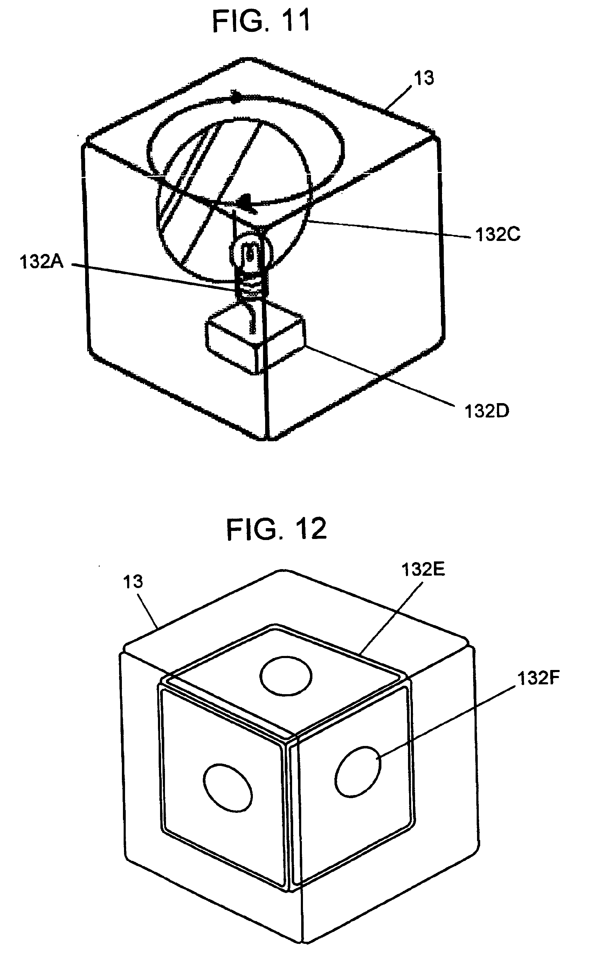

Moreover, controller 133 may give a command to make optical output device produce optical output in one way of turning the light source among three or more different ways of turning. More concretely, optical output unit 13 adopts the following structure, for instance. That is, optical output unit 13 is provided with rotatable reflector 132C next to the miniature lamp 132A, as shown in Fig. 11. Reflector 132C rotates by means of driving unit 132D such as a motor. A rotating mode, a rotating speed and the like of the reflector 132C are determined according to the received external information. For instance, reflector 132C rotates at a speed corresponding to a value given by the received external information. A structure of the light source is not limited to that described above so long as its turning motion is visually recognizable. In other words, the structure may be such that the light source can be perceived as if it is turning due to rotation of the reflector, or a shield for blocking light provided in a rotatable manner beside the light source. Or, it may be equipped with a non-diffusible light source in a rotatable manner.

Furthermore, controller 133 may make the optical output device produce optical output in one area size of lighting surface among three or more different area sizes. To be more specific, optical output unit 13 has a cubic structure inside of its cubic body, as shown in Fig. 12, and it is provided with six displays 132E for producing the optical output, for example. Displays 132E may be made of liquid crystal displays, for instance, and they compose optical output device 132. Optical output unit 13 appears to be vaguely illuminating in red color by the optical output of displays 132E. Controller 133 regulates the optical output by changing area size of lighting produced by displays 132E according to the received external information. Although displays 132E are described as giving red color in the above example, they may instead display circular graphics 132F, and controller 133 controls a diameter of the graphic display.

In addition, although both terminal 11 and optical output unit 13 are shown as having a cubic shape in this exemplary embodiment, they can be of any shape such as a rectangular hexahedral shape, a spherical shape, a doll figure, an animal figure and the like. Any shape which may be treated as a mascot is preferable for this kind of device used to communicate information softly. This idea also applies to all other exemplary embodiments in the like manner.

Moreover, the functions discussed in this exemplary embodiment may be achieved with software, which can be stored in a server for instance, and distributed by means of downloading. Alternatively, the software may be stored in a storage medium such as a CD-ROM for distribution. These techniques are also applicable similarly to all of the following exemplary embodiments.

(Second Exemplary Embodiment)

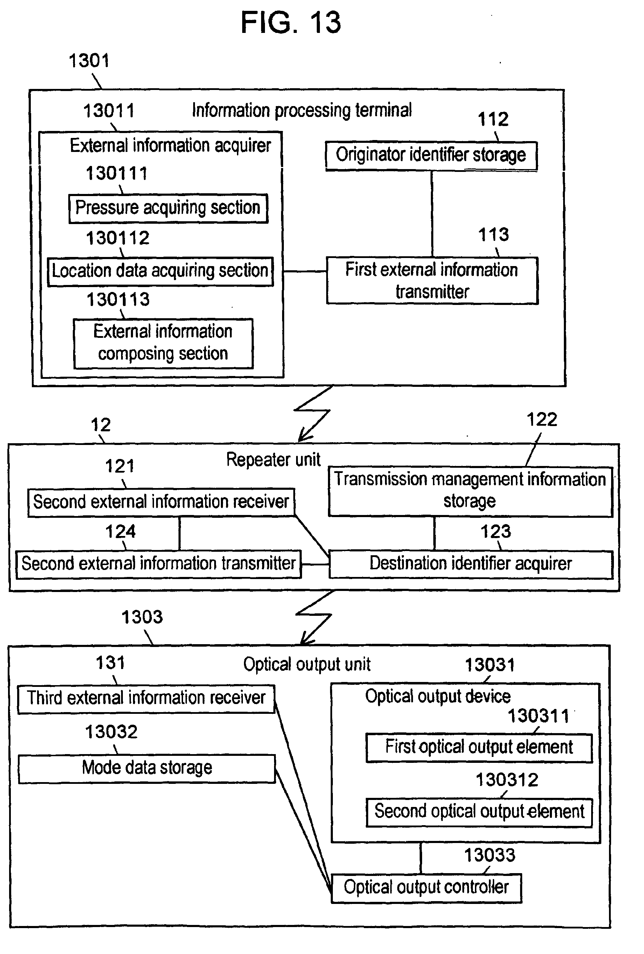

Fig. 13 is a block diagram of an information processing system according to the second exemplary embodiment.

This information processing system has information processing terminal 1301 (hereinafter referred to as "terminal"), repeater unit 12 and optical output unit 1303.

Terminal 1301 has external information acquirer 13011 (hereinafter "acquirer"), originator identifier storage 112 ("storage") and first external information transmitter 113 ("transmitter").

Acquirer 13011 has pressure acquiring section 130111, location data acquiring section 130112 and external information composing section 130113.

Pressure acquiring section 130111 obtains a pressure data representing information on pressure. Pressure acquiring section 130111 can be composed of one or more pressure sensors. As described in the first exemplary embodiment, pressure acquiring section 130111 obtains reading values of six pressure sensors in this exemplary embodiment.

Location data acquiring section 130112 obtains a location data representing information on a location where terminal 1301 is located. Location data acquiring section 130112 may be composed of a receiver of the GPS system, for instance. In this case, the location data includes values in the GPS coordinates.

External information composing section 130113 composes external information based on the pressure data obtained by pressure acquiring section 130111 and/or the location data obtained by location data acquiring section 130112. The external information includes at least one data set including a combination of a mode data representing a kind of information and a data value corresponding to the mode data.

Optical output unit 1303 has third external information receiver 131 (hereafter "receiver"), optical output device 13031, mode data storage 13032 ("storage") and optical output controller 13033 ("controller").

Optical output device 13031 has two or more optical output elements. In this embodiment here, there are two optical output elements, first optical output element 130311 and second optical output element 130312. First optical output element 130311 and second optical output element 130312 are mounted into such configurations, each having one element or a combination of two or more elements among the various kinds of optical output elements described in the first exemplary embodiment. The various kinds of optical output elements described in the first exemplary embodiment mean the following five different optical output elements. The first one is the output element that outputs light of a given intensity among three or more different levels of intensity, including a state of being turned off for no illumination. The second one is the output element that outputs light of one color among three or more different colors, including the state of being turned off. The third is the output element that outputs light of a given blinking mode among three or more different modes of blinking, including the state of being turned off. The fourth is the output element that outputs turning light of a given mode among three or more different modes of turning by rotating the light source, including the state of being turned off. The fifth is an output element that outputs light of a given area size of lighting surface among three or more different area sizes, including the state of being turned off. The above five methods of optical output are referred to hereinafter as various methods of optical output. The various methods of optical output are thus regarded analogous to those described in the first exemplary embodiment.

Storage 13032 stores mode data corresponding to the external information. Storage 13032 may be materialized with a nonvolatile storage medium such as a hard disk, or even a nonvolatile memory device.

Controller 13033 gives a command to make optical output device 13031 produce optical output only when a mode data included in the external information received by receiver 131 has a predetermined relation with the mode data stored in storage 13032. In addition, controller 13033 regulates the optical output of optical output device 13031 having two or more optical output elements according to the mode data and the data value contained in the external information received by receiver 131. Although controller 13033 is normally materialized with software, it can be composed of a specially designed circuit (i.e., hardware).

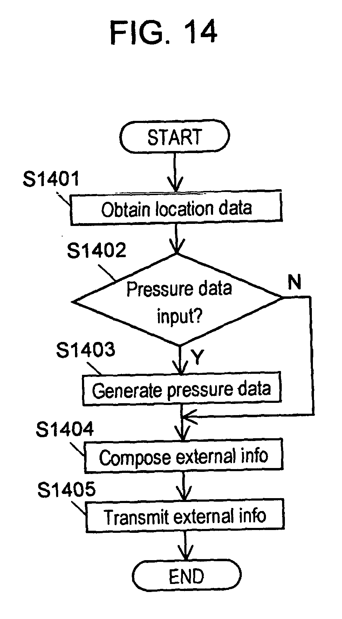

This information processing system operates in a manner which will be described hereinafter. Referring to Fig. 14, description is provided first of an operation of terminal 1301.

(S1401) Location data acquiring section 130112 obtains a location data.

(S1402) Pressure acquiring section 130111 determines whether or not it received an input of pressure. The process advances to S1403 if it has an input of pressure, or the process moves up to S1404 if it has no data on pressure.

(S1403) Pressure acquiring section 130111 generates a pressure data. The pressure data is composed of measurement result taken by one or more pressure sensors, and it is a data to be transmitted. When there are six pressure sensors, for example, pressure acquiring section 130111 performs an averaging process to obtain a mean value of the measured results from the six sensors. Pressure acquiring section 130111 also determines how the user holds terminal 1301 based on a number of sensors that detected the pressure. Pressure acquiring section 130111 may also perform a process of inferring the holding condition to generate a pressure data. To be more specific, pressure acquiring section 130111 determines that the user grabbed terminal 1301 with all fingers when five sensors detected pressures in value greater than zero. Or, pressure acquiring section 130111 determines that the user grasped terminal 1301 naturally when four sensors detected pressures. Furthermore, pressure acquiring section 130111 determines that the user touched (or pushed) the information processing terminal with a finger or the like when only one sensor detected a pressure. Accordingly, pressure acquiring section 130111 generates a pressure data covering two data on how the terminal is held and a force of the pressure. Concretely, the number of sensors that indicate larger values than zero represents the manner in which the terminal is held, and a mean value derived from a formula, "sum of the pressure values measured by the sensors" divided by "the number of sensors that indicate larger values than zero" represents the force of pressure.

(S1404) External information composing section 130113 composes external information from the location data and/or the pressure data. This external information includes at least one data set having a combination of a mode data representing a kind of information and a data value for the mode.

(S1405) Transmitter 113 transmits the external information composed in S1404. Although this external information is normally transmitted to repeater unit 12, it may be transmitted to optical output unit 1303 if there is no repeater unit.

Although the external information is obtained without receiving a trigger according to Fig. 14, the above operation may be initiated by a trigger produced when a user of terminal 11 presses a start button or the like. Alternatively, the operation of obtaining the external information in S201 may be initiated when it receives a triggering signal from any of optical output unit 1303, repeater unit 12 and other devices.

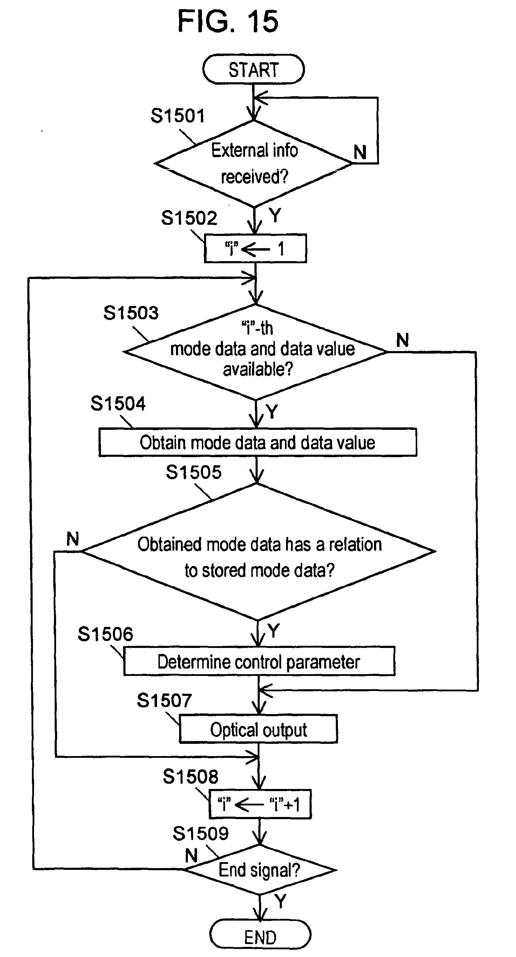

Referring to Fig. 15, description is provided next of an operation of optical output unit 1303.

(S1501) Receiver 131 determines whether or not it received the external information. The process advances to S1502 if receiver 131 has received the external information, or the process remains in S1501 for waiting reception if it has not.

(S1502) A number of counts "i" is substituted by 1 (one).

(S1503) Controller 13033 determines whether or not the received external information contains an "i"-th data mode and its data value. The process advances to S1504 if it does, or the process moves up to S 1507 if it does not.

(S1504) Controller 13033 obtains the "i"-th data mode and the data value.

(S1505) Controller 13033 determines whether or not the "i"-th data mode has a predetermined relation with any of the data mode stored in storage 13032. The process advances to S1506 if it has the relation, or the process moves up to S1508 if it does not.

(S1506) Controller 13033 determines a control parameter for optical output according to the "i"-th data mode and the data value.

(S1507) Optical output device 13031 produces optical output according to the control parameter determined in S1506.

(S1508) One is added to the number of counts "i". (S1509) Controller 13033 determines whether or not it receives input of an end signal. It then terminates the process of optical output when it receives input of the end signal, or the process returns to S 1503 if it does not.

Although optical output unit 1303 remains not active until it receives the external information in Fig. 15, it may be rather designed to send directly or indirectly a command for urging any of terminal 1301 and repeater unit 12 to transmit the external information.

In Fig. 15, controller 13033 insignificantly increases the number of counts "i" in S1508 after it determines a control parameter and produces an optical output according to a data value corresponding to every mode data. However, the above process may be so contrived as to skip S1508 after controller 13033 determines the control parameter and produces optical output according to the data value corresponding to all of the mode data. Such contrivance is applicable to all relevant flowcharts shown in this descriptive document. It is noted as a matter of course that all the flowcharts described in this specification represent only some examples of operating processes.

Description is provided hereinafter of a concrete operation of the information processing system according to this exemplary embodiment.

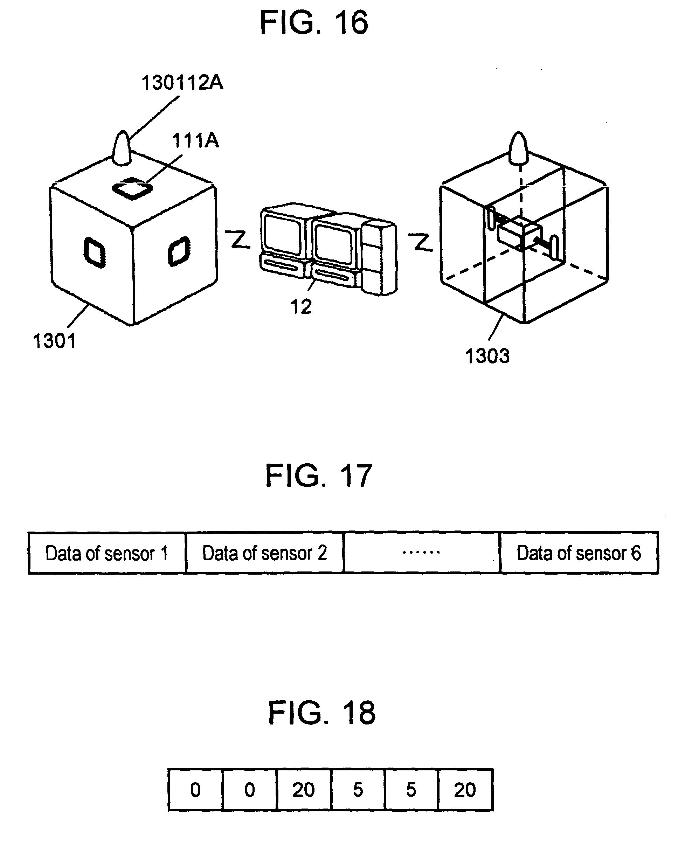

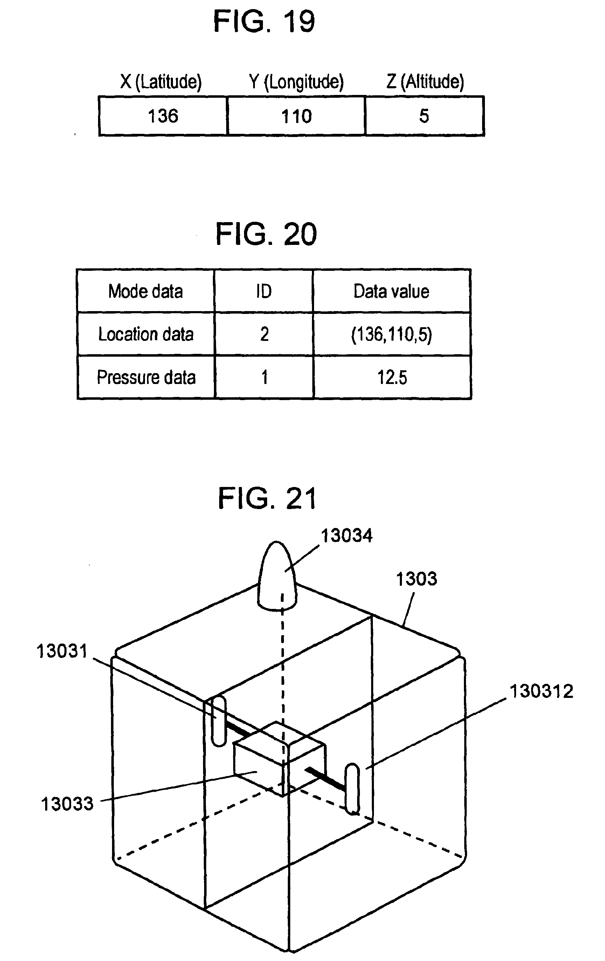

Terminal 1301 and optical output unit 1303 have regular hexahedral shapes (i.e., cubic shapes) respectively, as shown in Fig. 16. Terminal 1301 is provided with pressure sensor 111A disposed to each of the six surfaces for a total of six sensors 111A, and one unit of GPS receiver 130112A. Terminal 1301 constructed as above obtains data of a structure shown in Fig. 17 by means of pressure data acquiring section 130111 including the pressure sensors 111A. More concrete example of the pressure data is shown in Fig. 18. Terminal 1301 also obtains location data including values of the GPS coordinate system (i.e., X-, Y- and Z-coordinates) by means of location data acquiring section 130112 including the receiver 130112A A concrete example of the location data is shown in Fig. 19. External information composing section 130113 gets a pressure data to be transmitted based on the six pressure values. To be more specific, composing section 130113 calculates a value of data using a formula of "sum of the data" divided by "a number of data indicating larger values than zero". In this example, it obtains a value of 12.5 by calculating (0 + 0 + 20 + 5 + 5 + 20) / 4. It thus produces a pressure data showing "data mode: pressure data, ID: 1 and data value: 12.5".

Accordingly, external information composing section 130113 composes two sets of record, each having a mode data, a data value and an ID, as shown in Fig. 20. In other words, the external information has a structure having at least one set of record having "mode data", "data value" and "ID". The "ID" is information used to identify mode data, and therefore the "ID" may be replaced with "mode data".

Transmitter 113 transmits the above external information to optical output unit 1303 by way of repeater unit 12. Receiver 131 in optical output unit 1303 receives the external information.

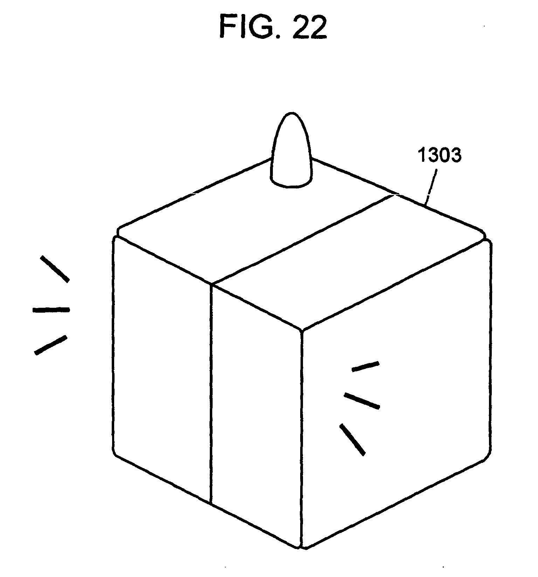

Storage 13032 has "location data" and "pressure data" as the data mode stored therein. In this case, both records of the information shown in Fig. 20 are used as the basis for optical control. Controller 13033 controls first optical output element 130311 according to the value of data mode of "location data", and second optical output element 130312 according to the value of data mode of "pressure data". First optical output element 130311 is composed of a blue LED, which illuminates brighter as a voltage applied to it increases. Second optical output element 130312 is composed of a red LED, which also illuminates brighter as a voltage applied to it increases. Fig. 21 is a general exterior view of optical output unit 1303, and Fig. 22 is another view of the optical output unit 1303 showing how it gives optical output. This optical output unit 1303 sets aside any record of data mode other than the "location data" and the "pressure data" if included in the received external information.

In addition, optical output unit 1303 may have second location data acquiring section 13034 for obtaining a location data of optical output unit 1303. Second location data acquiring section 13034 is composed of the same GPS receiver as that of terminal 1301, for instance. Controller 13033 calculates a distance between terminal 1301 and optical output unit 1303 based on the location data received from terminal 1301 and another location data output by the second location data acquiring section 13034. Controller 13033 then controls an intensity of the optical output according to the distance. For instance, controller 13033 controls optical output unit 1303 in a manner so that optical output unit 1303 outputs higher intensity the more the two devices come close to each other. This method of optical control can softly transmit a data representing the distance between an individual carrying terminal 1301 and another individual holding optical output unit 1303. Accordingly, the system can use any information other than the external information for control of the optical output.

In addition, this system can be so contrived that it determines a direction along which terminal 1302 moves based on a plurality of location data and time recorded when the location data are taken. This directional information allows the user to determine whether terminal 1301 is coming closer to or moving away from optical output unit 1303. Optical output unit 1303 may be designed to control intensity of the optical output or color of the optical output based on the determination of this directional information. This system can also take advantage of the well-known technique of utilizing a terrestrial magnetic sensor or the like for determining the moving direction.

Furthermore, controller 13033 outputs to second optical output element 130312 a strength of force with which terminal 1301 is grasped. When this occurs, second optical output element 130312 outputs the strength of grasping force as intensity of optical output.

For instance, assume that two individuals in love are coming closer to each other, and one of them carrying terminal 1301 grasps the terminal 1301 strongly. This causes the cubically shaped optical output unit 1303 to increase intensity of the optical output in both blue color (i.e., output of location data) and red color (i. e., pressure data) as a result of the above optical output function. The system can thus convey softly the one's desire of seeing the other.

According to the present exemplary embodiment as described above, there is provided the communication system capable of transmitting plural kinds of data from the terminal to the optical output unit so as to convey a number of information softly from one person to another.

In this exemplary embodiment, location data and pressure data are selected as examples composing the external information. However, they can be information of any kinds that represent certain conditions of a person carrying the terminal.

Moreover, the optical output control illustrated above is an example which changes intensity of the optical output. However, it can be a different form such as those described in the first exemplary embodiment (any of the five methods of optical control), and this applies to all of the exemplary embodiments.

Although optical output device 13031 has two optical output elements, it may have three or more elements, or even one element.

In this exemplary embodiment, the terminal obtains a location data by using the GPS system. However, it may use other method such as receiving transmission waves from base stations of mobile phone network to obtain the location data. Details of such techniques are not discussed here since they are the well-known arts.

Furthermore, the system of this exemplary embodiment uses the location data to control the first optical output element, and the pressure data to control the second optical output element. However, the system may be made customizable as to which data to use for controlling any of the optical output elements.

Moreover, the system uses mode data included in the external information received by optical output unit 1303 as the basis of the optical control only when a matching mode data is stored in storage 13032. In other words, the embodiment described here sets forth a condition that the mode data included in the external information matched with one of the mode data stored in storage 13032. However, the system may uses the mode data included in the external information as the basis of the optical control if it has a predetermined relation to one of the mode data stored in storage 13032.

(Third Exemplary Embodiment)

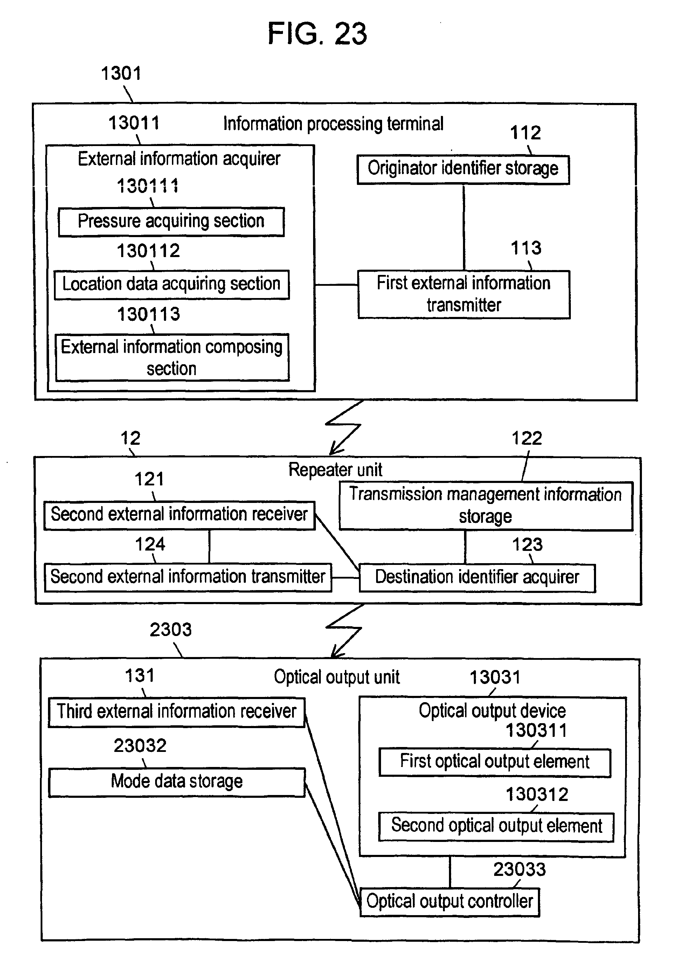

Fig. 23 is a block diagram of an information processing system according to this exemplary embodiment.

This information processing system has information processing terminal 1301, repeater unit 12 and optical output unit 2303.

Optical output unit 2303 has third external information receiver 131 (referred to as "receiver"), optical output device 13031, mode data storage 23032 ("storage") and optical output controller 23033 ("controller").

Storage 23032 stores therein optical output method identifiers for identifying methods of making optical output in a manner to correlate them with mode data.

When mode data included in external information received by receiver 131 has a predetermined relation with one of the mode data stored in storage 23032, controller 23033 gives a command to optical output device 13031 to make it produce optical output according to a method of optical output identified by an optical output method identifier corresponding to the mode data.

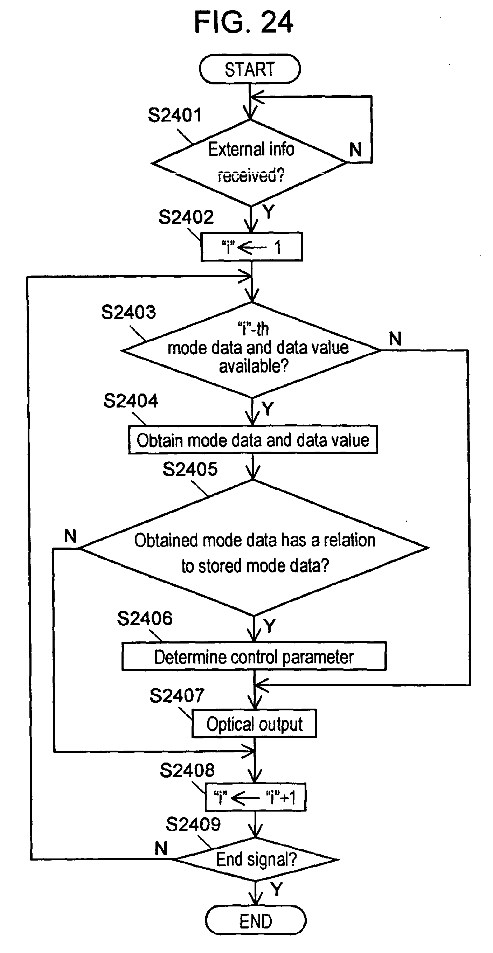

Optical output unit 2303 operates in a manner which is described next with reference to Fig. 24.

(S2401) Receiver 131 determines whether or not it received external information. The process advances to S2402 if receiver 131 has received external information, or the process remains in S2401 for waiting reception if it has not.

(S2402) Controller 23033 substitutes 1 (one) for a number of counts "i".

(S2403) Controller 23033 determines whether or not the received external information contains an "i"-th data mode and its data value. The process advances to S2404 if it does, or the process moves up to S2407 if it does not.

(S2404) Controller 23033 obtains the "i"-th data mode and the data value.

(S2405) Controller 23033 determines whether or not the "i"-th data mode has a predetermined relation with any of the data mode stored in storage 23032. The process advances to S2406 if it has the relation, or the process moves up to S2408 if it does not.

(S2406) Controller 23033 determines a control parameter for optical output according to the "i"-th data mode and the data value. More particularly, controller 23033 makes this determination of control parameter in the following manner, for example. Storage 23032 stores therein an optical output control table. The optical output control table contains a plurality of optical output control records, each including "optical output element identifier" for identifying any of the optical output elements, "mode data", and "optical output method identifier" for identifying each method of producing optical output, for instance. Controller 23033 controls optical output of the optical output element identified by the "optical output element identifier" corresponding to the "i"-th record in the optical output control table stored in storage 23032 according to the method identified by the "optical output method identifier" given in the same record. In this instance, controller 23033 provides the "i"-th data value as a parameter to control the optical output.

(S2407) The optical output element identified by the "optical output element identifier" in the above "i"-th record within optical output device 13031 produces optical output according to the control parameter determined in S2406.

(S2408) Controller 23033 adds 1 (one) to the number of counts "i".

(S2409) Controller 23033 determines whether or not it receives input of an end signal. It terminates the process of optical output when it receives input of the end signal, or the process returns to the step of S2403 if it does not.

Although optical output unit 2303 remains not active until it receives the external information in Fig. 24, it may be rather designed to send directly or indirectly a command for urging any of terminal 1301 and repeater unit 12 to transmit the external information.

Description is provided hereinafter of a concrete operation and the like of the information processing system according to this exemplary embodiment.

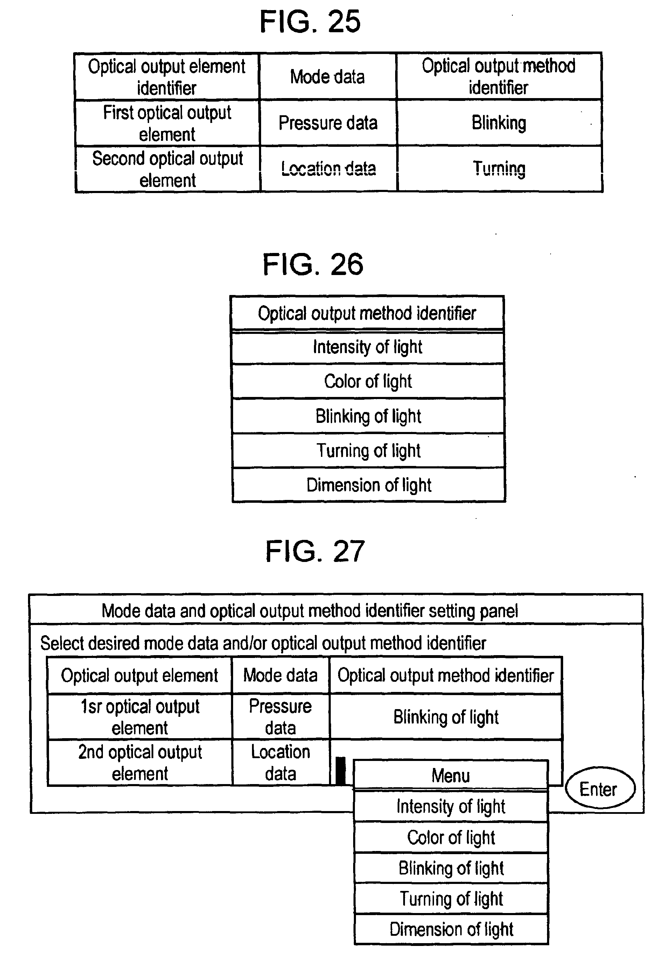

Storage 23032 stores therein an optical output control table such as the one shown in Fig. 25. The optical output control table contains a plurality of optical output control records, each including "optical output element identifier", "mode data", and "optical output method identifier", as described in the above example. First optical output element 130311 and second optical output element 130312 are adapted to operation according to any of optical control methods identified by five kinds of optical output control method identifiers shown in Fig. 26. The data of Fig. 26 are stored in advance in storage 23032, for instance. "Optical output method identifiers" in Fig. 25 are selected out of the five kinds of optical output control method identifiers shown in Fig. 26. In other words, "mode data" and "optical output method identifier" shown in the table of Fig. 25 can be customized by setting "mode data and optical output method identifier setting panel" such as one illustrated in Fig. 27. Fig. 27 shows an example of the panel and a menu displayed for customization of an optical output method identifier of the second optical output element 130312. Such a panel is provided in terminal 1301.

Accordingly, controller 23033 controls the optical output based on "mode data" and "optical output method identifier" selected for each of one or more optical output elements and the external information received by receiver 131.

To be more concrete, terminal 1301 transmits the external information shown in Fig. 20, for instance, to optical output unit 2303 via repeater unit 12. In this instance, second optical output element 130311 indicates location information by means of turning light according to the location data (136, 110, 5).

Additionally, optical output unit 2303 may also have a device for obtaining a location data (e.g., a GPS receiver) like that of the second exemplary embodiment. Controller 23033 calculates a distance between terminal 1301 and optical output unit 2303 based on a location data obtained by optical output unit 2303 and another location data received from terminal 1301. Controller 23033 then increases a turning speed of second optical output element 130312, for instance, as the distance becomes closer. Likewise, the turning speed is slow when the distance between terminal 1301 and optical output unit 2303 is far. This sort of control is achieved by changing a rotating speed of an optical reflector, to be more specific.

Optical output unit 2303 also receives a pressure data of "12.5" in the external information shown in Fig. 20. Optical output of first optical output element 130311 is then controlled in a manner to blink according to the value of this "pressure data 12.5". More specifically, the larger the value of pressure data is, the shorter the blinking intervals of light produced by first optical output element 130311 are. For instance, when the pressure data has a value of "X", it turns the optical output on and off at intervals of "10/X".

According to the present exemplary embodiment as described above, there is provided the communication system capable of transmitting plural kinds of data from the terminal to the optical output unit so as to convey softly a number of information from one person to another. In addition, this exemplary embodiment can also provide the optical output unit capable of producing optical output according to a preference of the user, and adjustable to function of the terminal in obtaining information, by way of customizing the mode data and optical output method identifiers.

In this exemplary embodiment, the external information includes a location data and a pressure data. However, the external information can include any kind of data so long as it represents a condition or a state of the individual carrying terminal 1301.

Although optical output device 13031 has two optical output elements, it may have three or more elements, or even one element. If there is only one optical output element, the optical output control table stored in storage 23032 is not required to include the attribute of "optical output element identifier" since the element to be lighted is known.

Moreover, in this exemplary embodiment, controller 23033 in optical output unit 2303 has a table containing records, each of which includes "optical output element identifier, "mode data" and "optical output method identifier". However, the table may be managed in the repeater unit, so that the repeater unit performs the process of determining a control parameter using the table. In this case, the repeater unit transmits the determined control parameter as the external information to the optical output unit. When the optical output unit receives the control parameter, it simply produces optical output according to the control parameter. This can provide the optical output unit of a simple structure. This concept also applies to all of the other exemplary embodiments discussed in this descriptive document. In other words, the repeater unit carries out the process (e.g., determination of control parameter, and the like) that is to be performed normally by the optical output unit, and the optical output unit thus functions simply as a device to produce optical output.

In addition, the system uses the external information received by optical output unit 2303 as the basis of the optical control only when the mode data received by optical output unit 2303 matches with one of the mode data stored in storage 23032. However, the system may uses the external information as the basis of the optical control if the mode data of the external information has a predetermined relation to one of the mode data stored in storage 13032. The predetermined relation may be considered established if, for instance, a number of mode data are grouped, and the mode data included in the external information belongs to a same group as the mode data stored in storage 23032. A variety of other relations are also considered available beside the above.

(Fourth Exemplary Embodiment)

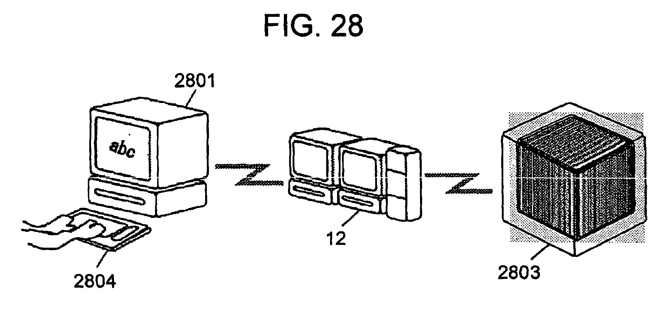

Fig. 28 shows a conceptual diagram of an information processing system according to the fourth exemplary embodiment. This information processing system has information processing terminal 2801 (hereafter referred to as "terminal"), repeater unit 12, optical output unit 2803 and input unit 2804.

Terminal 2801 is composed of a computer, which detects a signal carrying data input through input unit 2804 such as a keyboard. Terminal 2801 calculates the number of incoming signals being input in a given period of time, and obtains an input speed data representing information on a speed of the incoming signals. In addition, it transmits external information containing the input speed data to repeater unit 12.

Optical output unit 2803 cumulatively stores the external information including information received from the keyboard via repeater unit 12, and makes a historical record of the input speed data known to the outside by means of optical output.

Input unit 2804 is a device such as a keyboard, a mouse and a remote controller for entering data.

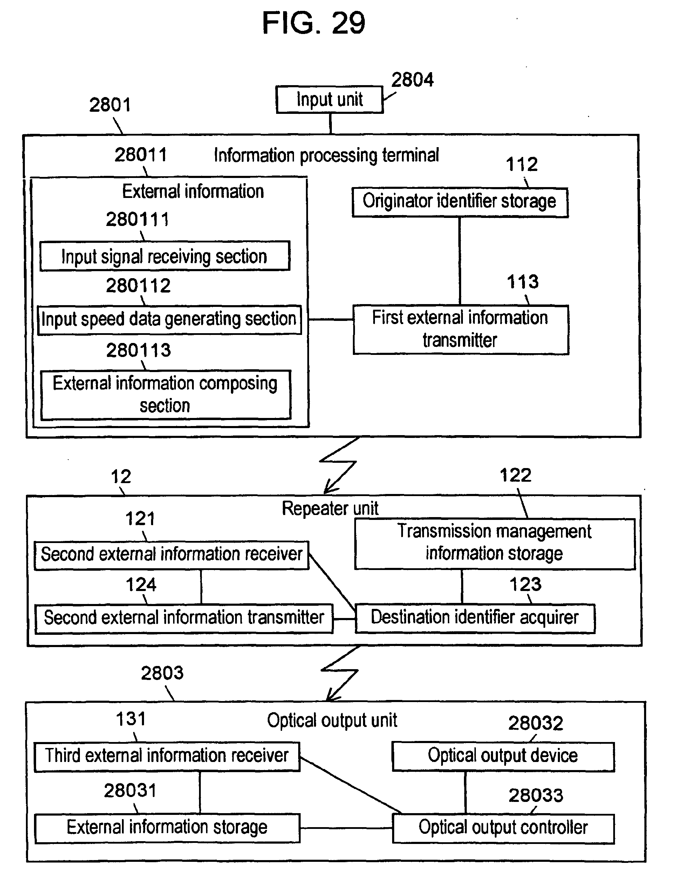

Fig. 29 shows a block diagram of this information processing system.

Terminal 2801 has external information acquirer 28011 ("acquirer"), originator identifier storage 112 ("storage") and first external information transmitter 113 ("transmitter").

Acquirer 28011 has input signal receiving section 280111 ("receiving section"), input speed data generating section 280112 ("generating section") and external information composing section 280113 ("composing section").

Acquirer 28011 obtains external information. In this exemplary embodiment, the external information is composed of an input speed data representing information on speed of getting data signals from input unit 2804.

Receiving section 280111 receives an input signal from input unit 2804. Receiving section 280111 is composed of hardware and software, for instance, to obtain the signal input through the keyboard.

Generating section 280112 generates an input speed data, which is information representing a speed of incoming data, based on the input signal received by receiving section 280111. Although generating section 280112 is usually materialized with software, it may be composed of a specially designed circuit (i.e., hardware).

Composing section 280113 composes external information containing the input speed data generated by generating section 280112. However, the external information can be of the same data as the input speed data. In this case, composing section 280113 is not required to perform any function, that is, "nop" ("not operative").

Optical output unit 2803 has third external information receiver 131 ("receiver"), external information storage 28031 ("storage"), optical output device 28032 and optical output controller 28033 ("controller").

Storage 28031 stores the external information received by receiver 131. A storage medium is used for storing the external information, although not shown in the figure. The storage medium is provided within storage 28031, for example. The storage medium may be a nonvolatile memory such as a hard disk, a semiconductor memory and the like, or a volatile memory. Although storage 28031 is normally materialized with software for storing information, it can be composed of a specially designed circuit (i.e., hardware).

Optical output device 28032 outputs light according to a parameter. The parameter is determined based on one or more external information stored in storage 28031 and/or the external information received by receiver 131. Optical output device 28032 thus produces optical output in a manner so that the historical data of the received external information can be visually understood.

Controller 28033 controls the optical output of optical output device 28032. To be more concrete, controller 28033 determines the parameter used for controlling the optical output of optical output device 28032 based on the one or more external information stored in storage 28031 and/or the external information received by receiver 131.

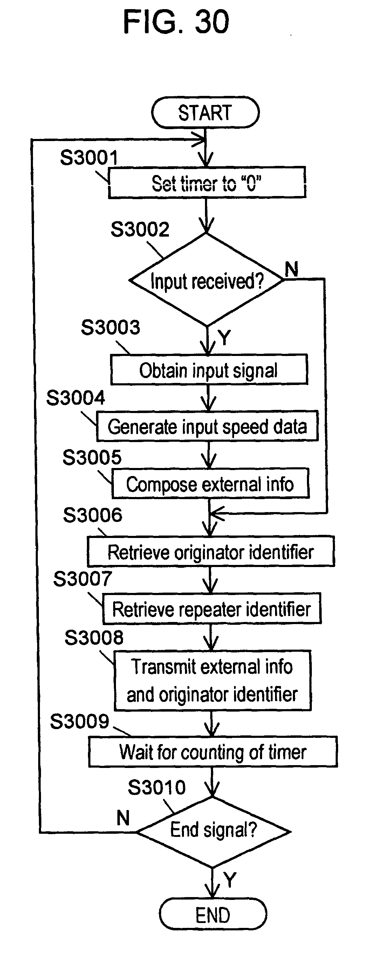

The information processing system operates in a manner which is described hereinafter with reference to flowcharts. Description is provided first of an operation of terminal 2801 by using Fig. 30.

(S3001) A timer, not shown in the figure, is set to 0 (zero). This timer makes counting independently of a variety of processes performed in terminal 280 1.

(S3002) Receiving section 280111 determines whether or not there is a reception of input signal. If there is an input signal, it stores the input signal in a queue buffer, not shown in the figure. Receiving section 280111 checks this queue buffer regularly for presence of any data.

(S3003) Receiving section 280111 obtains all input signals delivered in a given period of time. More concretely, receiving section 280111 obtains all data in the queue buffer, and empties it. Alternatively receiving section 280111 may simply count a number of data in the queue buffer.

(S3005) Generating section 280112 generates an input speed data based on data acquired in S3003 or the number of the data

(S3006) Transmitter 113 retrieves an originator identifier from storage 112.

(S3007) Transmitter 113 also retrieves a repeater identifier used for identifying the repeater unit. The repeater identifier is stored beforehand in a storage though not shown in the figure. The repeater identifier is the data necessary to communicate with repeater unit 12, and it may be an IP address of repeater unit 12, for instance.

(S3008) Transmitter 113 transmits the external information and the originator identifier to repeater unit 12 identified by the repeater identifier.

(S3009) The process is put in pause until the number of counts, which is being made independently by the timer, reaches a predetermined value ("n").

(S3010) Acquirer 28011 determines whether or not it receives an end signal. The process is terminated when it receives the end signal, or the process returns to the step of S3001 if it does not.

The processes of obtaining the external information in S3001 et seq. are initiated without receiving any trigger according to the flowchart of Fig. 30. However, the above processes may be initiated by a trigger produced when a user of terminal 2801 presses a start button or the like. Alternatively, the processes of obtaining the external information in S3001 et seq. may be initiated when terminal 2801 receives a triggering signal from any of optical output unit 2803, repeater unit 12 and other devices.

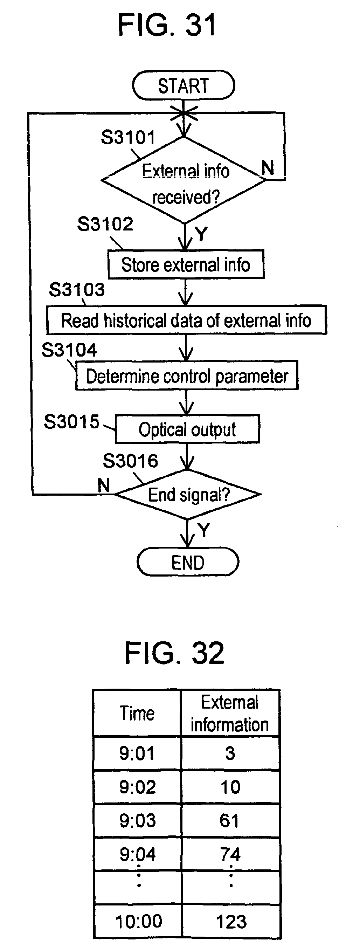

Description is provided next of an operation of optical output unit 2803 by referring to Fig. 31.

(S3101) Receiver 131 determines whether or not it has received the external information. The process advances to S3102 if it has received the external information, or the process remains in S3101 if it has not.

(S3102) Storage 28031 stores the external information received in S3101.

(S3103) Controller 28033 reads all of the external information (i.e., a historical data) stored in storage 28031.

(S3104) Controller 28033 determines a control parameter for use in optical control based on the historical data obtained in S3103.

(S3105) Optical output device 28032 outputs light according to the control parameter determined in S3102.

(S3106) Controller 28033 determines whether or not it received an end signal from the outside. The process returns to S3101 if it has not received the end signal, or the process is terminated if it has received the end signal. In other words, the optical output is terminated and the light goes off upon reception of the end signal.

Although optical output unit 2803 remains not active until it receives the external information in Fig. 31, it may be rather designed to send directly or indirectly a command for urging any of terminal 2801 and repeater unit 12 to transmit the external information.

Furthermore, controller 28033 is illustrated in Fig. 31 as controlling the optical output of optical output device 28032 according to one or more external information stored in storage 28031. However, controller 28033 may control the optical output of optical output device 28032 based on both the one or more external information stored in storage 28031 and another external information received by receiver 131. In other words, storage 28031 may store the external information at any timing before and after producing the optical output.

Description is provided hereinafter of a concrete operation and the like of the information processing system according to this exemplary embodiment.

Storage 28031 stores therein a historical log of the external information (a historical data) such as one shown in Fig. 32. The historical data is composed of records including external information and time when the external information has been transmitted. The historical data shown in Fig. 32 includes the external information transmitted to optical output unit 2803 in a time period of 9:01 and 10:00.

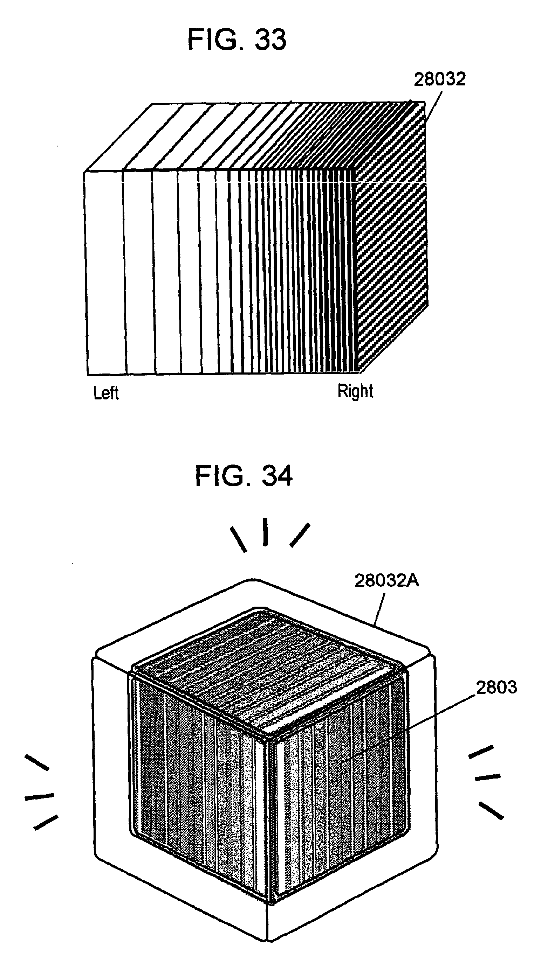

Controller 28033 reads the above external information, and controls the optical output in a manner so that changes in value of the external information are visually recognizable. According to Fig. 32, the input speed data obtained in terminal 2801 show gradual increase. Therefore, optical output unit 2803 illuminates with stronger intensity, the closer it is toward the right side of its cubic body as shown in Fig. 33. Optical output unit 2803 has a cubic body, and illumination of the left side represents an input speed data of the past, and the closer it is to the right side, the more recent the input speed data.

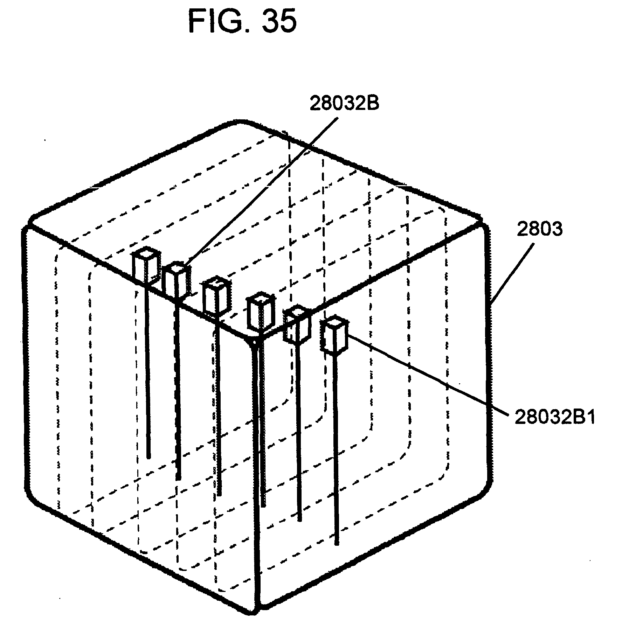

Optical output device 28032 of optical output unit 2803 may be constructed of display 28032A having six faces (e.g., a liquid crystal display) as shown in Fig. 34, or it may have such a structure as illustrated in Fig. 35. When optical output device 28032 is composed of display 28032A, differences in intensity of the light are vaguely shown to the eyes with gradation, for instance as illustrated in Fig. 34. The structure shown in Fig. 35 has partitions formed at regular intervals inside the cubic body, and LED 28032B is disposed within each space between the partitions. Controller 28033 controls luminous intensity of the individual LED's 28032B between the partitions according to the historical data. More specifically, luminous intensity of LED 28032B1 at the right end is determined according to the latest external information when it is illuminated. The partitions prevent light from coming through into the adjoining spaces.

According to this exemplary embodiment as described above, terminal 2801 continuously transmits to optical output unit 2803 the information representing speed of data being input from input unit 2804. Optical output unit 2803 produces the optical output vaguely to thus convey softly a working manner of a person using terminal 2801 to another person carrying optical output unit 2803. If the person using the terminal 2801 is a husband at work, and another person carrying the optical output unit 2803 is his wife, for example, the manner in which the husband is working is transmitted to the wife vaguely. As a result, it may make the wife feel inclined to prepare delicious dinner and wait for him. Because of this feature of the system to convey the manner of working vaguely, it can keep good communications between specific individuals.

In this exemplary embodiment, data of input speed are transmitted and optically output continuously. However, the system may be so altered as to make the optical output based on a value of single input speed data. In this case, storage 28031 is not necessary in the optical output unit.

(Fifth Exemplary Embodiment)

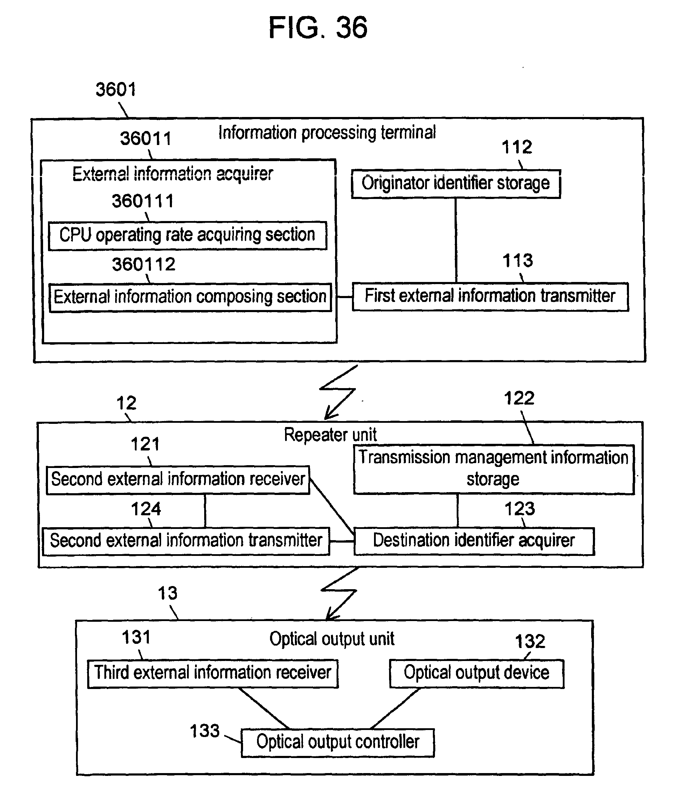

Fig. 36 shows a block diagram of an information processing system according to this exemplary embodiment. This information processing system has information processing terminal 3601 (hereafter referred to as "terminal"), repeater unit 12 and optical output unit 13. Terminal 3601 has external information acquirer 36011 ("acquirer"), originator identifier storage 112 ("storage") and first external information transmitter 113 ("transmitter").

Acquirer 36011 has CPU operating rate acquiring section 360111 ("acquiring section") and external information composing section 360112 ("composing section").

Acquiring section 360111 obtains an operating rate of CPU in terminal 3601. An operating rate of the CPU is usually expressed by any numerical value between 0 (%) and 100 (%). Because the CPU operating rate is obtained by using the presently known technique such as one provided in the UNIX-OS, description of it is not given here in detail. Although acquiring section 360111 is materialized normally with software, it may be composed of hardware. Terminal 3601 is an electrical apparatus provided with a CPU, and typical terminal 3601 is a computer.

Composing section 360112 composes external information by using a CPU operating rate obtained via acquiring section 360111. Although composing section 360112 is materialized normally with software, it may be composed of hardware.

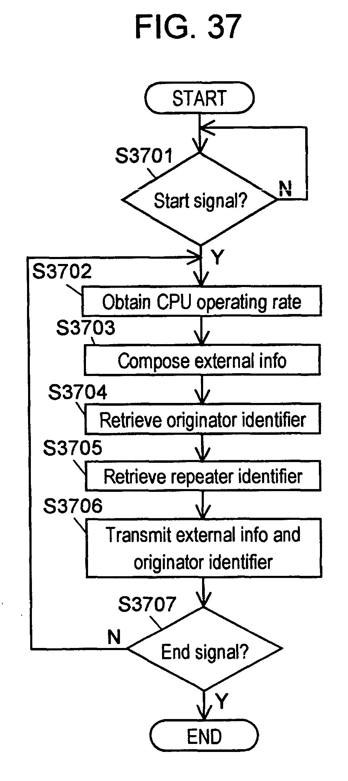

Referring to Fig. 37, description is provided hereinafter of an operation of terminal 3601 constituting this information processing system.

(S3701) Acquirer 36011 determines whether or not it has received a start signal for initiating the process of composing and transmitting external information. The process advances to S3702 when it has received the start signal, or the process remains in S3701 if it has not received the start signal. The start signal may be generated when a user presses a start button, or it may be transmitted from outside (i.e. any of optical output unit 13, repeater unit 12 and another device, for example).

(S3702) Acquiring section 360111 obtains a CPU operating rate of terminal 3601.

(S3703) Composing section 360112 composes external information from the CPU operating rate acquired in S3702.

(S3704) Transmitter 113 retrieves an originator identifier from storage 112.

(S3705) Transmitter 113 retrieves a repeater identifier representing a data for identifying a repeater unit. The repeater identifier is stored beforehand in a storage though not shown in the figure.

(S3706) Transmitter 113 transmits the external information and the originator identifier to repeater unit 12 identified by the repeater identifier.

(S3707) Acquirer 36011 determines whether or not it has received an end signal. The process is terminated if it has received an end signal, or the process returns to S3702 if it has not.

Since repeater unit 12 and optical output unit 3 operate in the same manner as those of the first exemplary embodiment, their details are omitted.

According to this exemplary embodiment as described above, the CPU operating rate of terminal 3601 is transmitted to optical output unit 13, which in turn produces optical output vaguely. As a result, the system softly conveys a pseudo-state of working condition of an individual using terminal 3601 to another individual who carries optical output unit 13.

An interface used to obtain the CPU operating rate is publicly opened through the ordinary data processors (e.g., computers and operating systems). Therefore, this system can be achieved with a simpler architecture than that described in the fourth exemplary embodiment which acquires a speed of data input from input unit 2804 such as a keyboard. That is, although the CPU operating rate is a data representing the pseudo-state of working condition, this pseudo-state of work being performed by an individual using terminal 3601 can be conveyed softly to another individual carrying optical output unit 13 with the above simpler architecture.

According to this exemplary embodiment, optical output unit 13 changes its optical output whenever it receives data of CPU operating rate one by one. However, optical output unit 13 may be designed to receive continuously transmitted data on the CPU operating rate, and to produce optical output based on a data representing a plurality of CPU operating rates (i.e., historical data). An architecture and process in this case are precisely analogous to those of the fourth exemplary embodiment. In other words, the system requires external information storage 28031 in this case.

(Sixth Exemplary Embodiment)

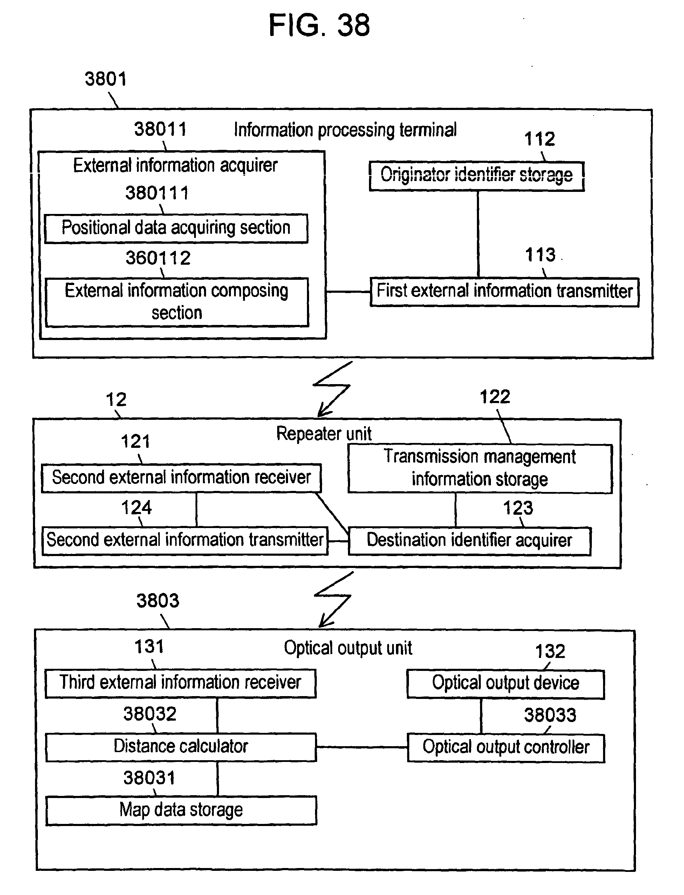

Fig. 38 shows a block diagram of an information processing system according to the sixth exemplary embodiment. This information processing system has information processing terminal 3801 (hereinafter "terminal"), repeater unit 12 and optical output unit 3803.

Terminal 3801 has external information acquirer 38011 ("acquirer"), originator identifier storage 112 ("storage") and first external information transmitter 113 ("transmitter").

Acquirer 38011 has positional data acquiring section 380111 ("acquiring section") and external information composing section 380112 ("composing section").

Acquiring section 380111 obtains a positional data representing information on a place where terminal 3801 is present. Acquiring section 380111 is materialized by such means that receives a radio signal from an FRID tag in which positional data is stored, for instance. However, acquiring section 380111 may be composed of any other means as long as it can obtain a positional data. For instance, a radio communication means capable of acquiring a positional data through wireless communications using Bluetooth is considered suitable as an alternative means.

Composing section 380112 composes external information by taking the positional data obtained through acquiring section 380111. Composing section 380112 can be comprised of hardware although it is usually materialized with software.

Optical output unit 3803 has third external information receiver 131 ("receiver"), optical output device 132, map data storage 38031 ("storage"), distance calculator 38032 ("calculator") and optical output controller 38033 ("controller").

Storage 38031 stores a map data representing information on a map. Although storage 38031 is normally materialized with a nonvolatile memory such as a hard disk, an optical disk and the like, it may be made of a volatile storage medium.

Calculator 38032 calculates a distance between terminal 3801 and optical output unit 3803 based on the external information (i.e., positional data) received by receiver 131 and the map data stored in storage 38031. Although calculator 38032 is materialized normally with software, it may be composed of hardware.

Controller 38033 controls an optical output of optical output device 132 according to the distance calculated by calculator 38032. Although controller 38033 is materialized normally with software, it may be composed of hardware.

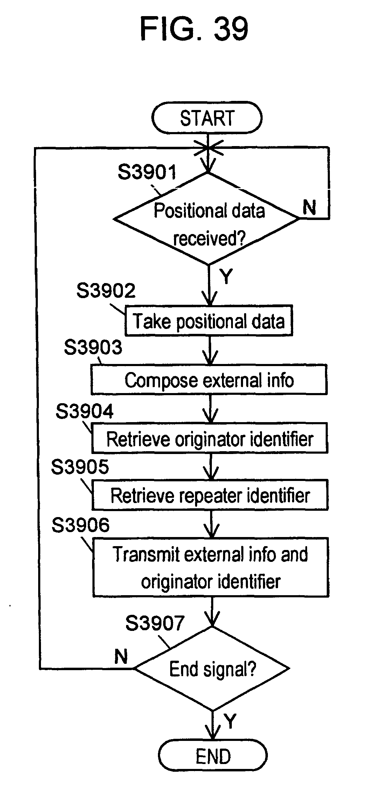

This information processing system operates in a manner which will be described hereinafter. Description is provided first of an operation of terminal 3801 with reference to Fig. 39.

(S3901) Acquiring section 380111 determines whether or not it has received a signal including a positional data. The process advances to S3902 when it has received the signal, or the process remains in S3901 if it has not received the signal.

(S3902) Acquiring section 380111 picks out the positional data from the signal received in S3901.

(S3903) Composing section 380112 composes external information by using the positional data obtained in S3902.

(S3904) Transmitter 113 retrieves an originator identifier from storage 112.

(S3904) Transmitter 113 obtains a repeater identifier representing information for identifying a repeater unit. The repeater identifier is stored beforehand in a storage though not shown in the figure.

(S3905) Transmitter 113 transmits the external information and the originator identifier to repeater unit 12 which is identified by the repeater identifier.

(S3906) Acquirer 38011 determines whether or not it has received an end signal. Acquirer 38011 terminates the process if it has received the end signal, or returns to S3901 if it has not.

The process of obtaining the external information is carried out without receiving any trigger according to the flowchart of Fig. 39. However, the above process may be initiated by a trigger produced when a user of terminal 3801 presses a start button or the like. Alternatively, the process of obtaining the external information in 3901 may be initiated when terminal 3801 receives a triggering signal from any of optical output unit 3803, repeater unit 12 and other devices.

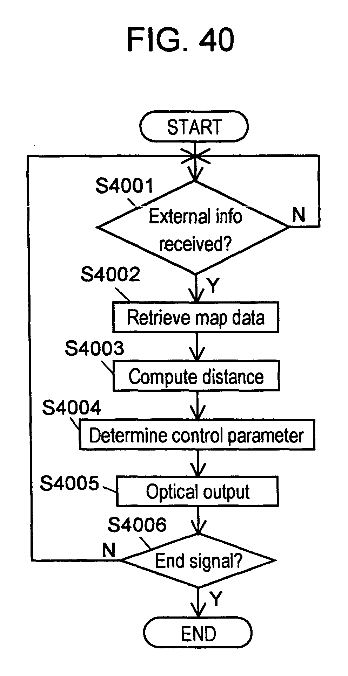

Description is provided next of an operation of optical output unit 3803 by referring to Fig. 40.

(S4001) Receiver 131 determines whether or not it has received the external information. The process advances to S4002 if it has received the external information, or the process remains in S4001 if it has not.

(S4002) Calculator 38032 retrieves a map data stored in storage 38031.

(S4003) Calculator 38032 calculates a distance between terminal 3801 and optical output unit 3803 based on the map data retrieved in S4002 and the external information (i.e., positional data) received in S4001.

(S4004) Controller 38033 determines a control parameter for use in the optical control based on the distance calculated in S4003.

(S4005) Optical output device 132 outputs light according to the control parameter determined in S4004.

(S4006) Controller 38033 determines whether or not it has received an end signal from the outside. The process returns to S4001 if it has not received the end signal, or the process is terminated if it has received the end signal. In other words, the optical output is terminated and the light goes off upon reception of the end signal.

In Fig. 40, optical output unit 3803 remains not active until it receives the external information. However optical output unit 3803 may be rather designed to send directly or indirectly a command for urging any of terminal 3801 and repeater unit 12 to transmit the external information.

Description is provided hereinafter of a concrete operation and the like of the information processing system in this exemplary embodiment.

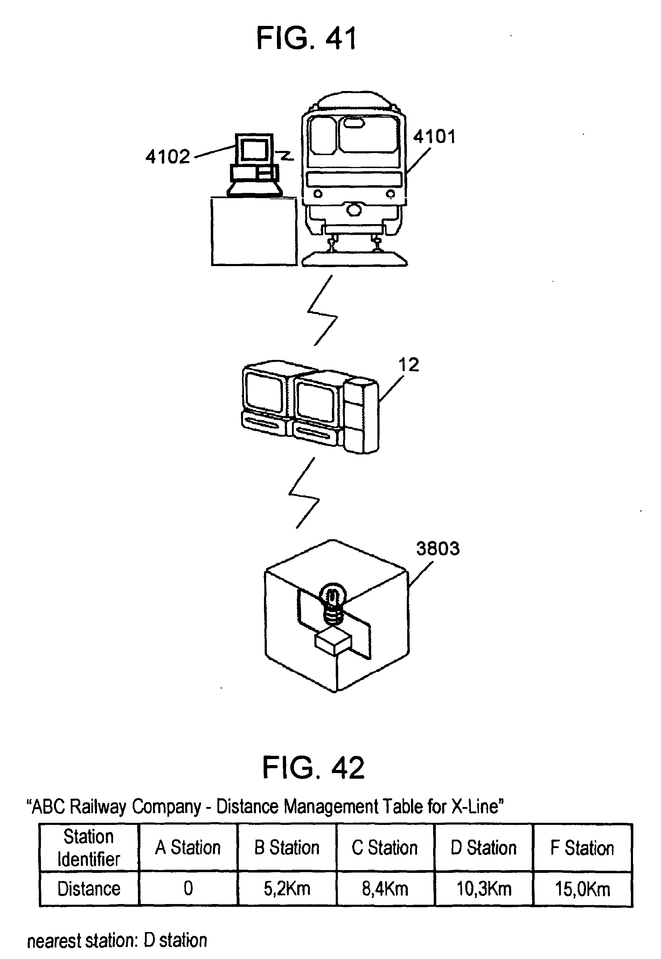

Assume that terminal 3801 in this embodiment here is a mobile phone with a function of receiving data of an RFID tag. When train 4101 running on a railway line "X" of ABC Railway Company stops at one train station, as shown in Fig. 41, information processing unit 4102 provided in the platform transmits a station identifier representing information for identifying the train station to an IR module inside the train 4101. A mobile phone reads information on the RFID tag in the train. The station identifier is thus transmitted in this manner to repeater unit 12 from the mobile phone, although not shown in the figure, inside train 4101. The station identifier may be a data denoting "A station", for example.

Storage 38031 stores "distance management table for X-line of ABC Railway Company" shown in Fig. 42. The distance management table includes a plurality of information, each including "station identifier" and "distance" from one station identified by a first station identifier. Storage 38031 separately stores a data representing a station nearest to the place where the optical output unit 3803 is located. Assume now that storage 38031 stores a station identifier of "D station" which is the nearest station.

In the system of the above architecture, terminal 3801 transmits external information including a positional data of "A station" to optical output unit 3803 via repeater unit 12. Calculator 38032 then calculates a distance between "A station" included in the external information and the nearest "D station" by using the distance management table. In this example, the distance is calculated as "8.4km - 0km = 8.4km".

Next, controller 38033 determines a parameter for optical control based on the distance calculated as above. Optical output device 132 vaguely shows a state of the user of terminal 3801 by changing intensity of light. Controller 38033 determines the intensity of light according to the parameter. Here, controller 38033 uses the following formula to determine the intensity of light:

$$\text{Intensity of light} = \text{"n"} / \text{computed distance.}$$

In other words, the shorter the distance to optical output device 132 is, the higher intensity of light it generates.

Accordingly, the system conveys to an individual in front of optical output unit 3803 whether another individual carrying terminal 3801 is getting closer to the optical output unit 3803 or farther away from it.

According to this exemplary embodiment as described above, optical output unit 3803 outputs light softly to visualize the state in which the user of terminal 3801 is coming closer to optical output unit 3803 according to the positional data transmitted from terminal 3801 to optical output unit 3803.

In this exemplary embodiment, although optical output device 132 is illustrated as having one optical output element, it may be provided with two or more elements. Two or more optical output elements can be controlled in the like manner and method as described in the previous exemplary embodiments.

In this exemplary embodiment, the process of calculating a distance from the positional data is carried out in optical output unit 3803. However, this process of calculating the distance from the positional data may be performed in one of information processing unit 4102 and repeater unit 12. In this case, one of information processing unit 4102 and repeater unit 12 is provided with equivalents of storage 38031 and calculator 38032. Hence the optical output unit receives a result (i.e., distance data) calculated by the calculator as external information from the repeater unit or the like, and produces optical output according to the external information.

In addition, this system can make the user know whether terminal 3801 is getting closer to optical output unit 3803 or getting away from it, when optical output unit 3803 receives a plurality of positional data from terminal 3801. Optical output unit 3803 may also be designed to distinguish between "getting closer" and "getting away", and to use it to control the optical output. In other words, it outputs light of "warm colors" when getting closer, and light of "cold colors" when getting away, for instance. It then produces the optical output of "bright red" when terminal 3801 comes to a very close distance, and "deep blue" when the distance becomes too far away. The system operated in this manner can convey a positional relation between the two devices more precisely.

(Seventh Exemplary Embodiment)

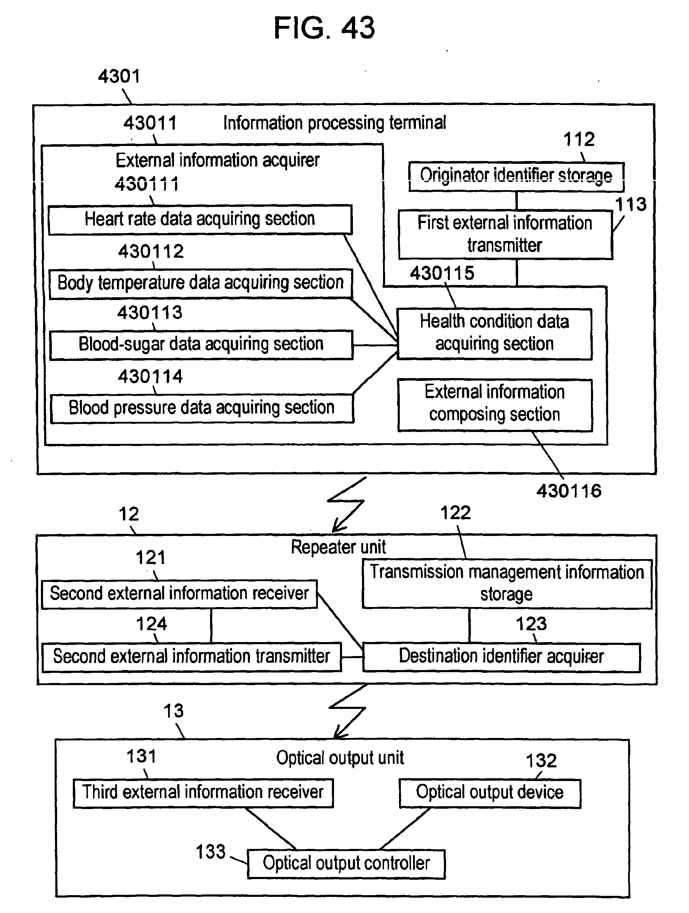

Fig. 43 shows a block diagram of an information processing system according to the seventh exemplary embodiment. This information processing system has information processing terminal 4301 (hereinafter referred to as "terminal"), repeater unit 12 and optical output unit 13.

Terminal 4301 has external information acquirer 43011 ("acquirer"), originator identifier storage 112 ("storage") and first external information transmitter 113 ("transmitter").

Acquirer 43011 has heart rate data acquiring section 430111, body temperature data acquiring section 430112, blood-sugar data acquiring section 430113, blood pressure data acquiring section 430114 and health condition data acquiring section 430115. Every one of these components is referred to as acquiring section, and they are distinguished by the reference numerals in the following description. Acquirer 43011 also has external information composing section 430116 ("composing section").

Acquiring section 430111 obtains a heart rate data representing information on cardiac rate. Acquiring section 430112 obtains a body temperature data representing information on body temperature. Acquiring section 430113 obtains a blood-sugar data representing information on blood-sugar. Acquiring section 430114 obtains a blood pressure data representing information on blood pressure. Commercially available apparatuses such as electronic health checkers are realized as devices capable of obtaining heart rate data, body temperature data, blood-sugar data and blood pressure data, and techniques and methods of obtaining the above-said data are a well known. Detailed description on how to obtain the heart rate data, body temperature data, blood-sugar data and blood pressure data is therefore omitted here.

Acquiring section 430115 generates a health condition data representing information, which indicates a general health condition, based on all or a part of the data obtained by acquiring section 430111, acquiring section 430112, acquiring section 430113, acquiring section 430114, and the like. Although acquiring section 430115 is materialized usually with software, it may be composed of a specially designed circuit (i.e., hardware).

Composing section 430116 composes external information to be transmitted to repeater unit 12 based on all or a part of data obtained by acquiring section 430111, acquiring section 430112, acquiring section 430113, acquiring section 430114 and acquiring section 430115. Although composing section 430116 is usually materialized with software, it may be composed of a specially designed circuit (i.e., hardware).

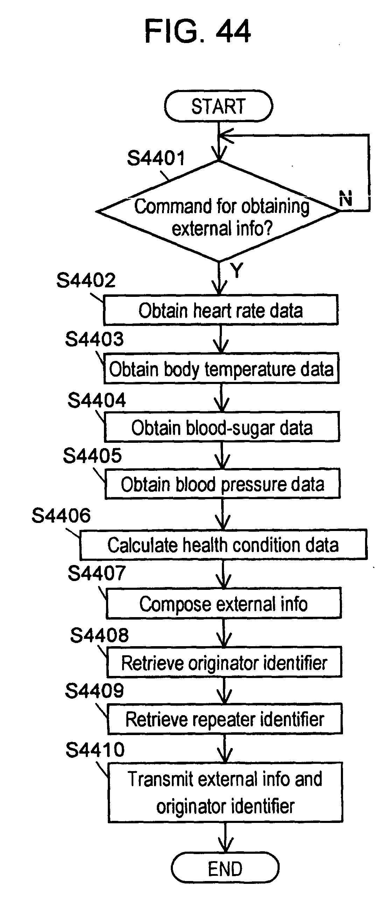

Terminal 4301 operates in a manner which is described hereinafter with reference to Fig. 44.

(S4401) Acquirer 43011 determines whether or not it has received input of a command urging it to obtain external information. The process advances to S4402, if it has received the input, or the process remains in S4401 if it has not.
(S4402) Acquiring section 430111 obtains a heart rate data.
(S4403) Acquiring section 430112 obtains a body temperature data.
(S4404) Acquiring section 430113 obtains a blood-sugar data.
(S4405) Acquiring section 430114 obtains a blood pressure data.
(S4406) Acquiring section 430115 generates a health condition data based on the data obtained in the steps of S4402 to S4405.
(S4407) Composing section 430116 composes external information based on the data obtained in the steps of S4402 to S4406.
(S4408) Transmitter 113 retrieves an originator identifier from storage 112.
(S4409) Transmitter 113 retrieves a repeater identifier representing a date used to identify the repeater unit. The repeater identifier is stored beforehand in a memory, though not shown in the figure.
(S4410) Transmitter 113 transmits the external information and the originator identifier to repeater unit 12 identified by the repeater identifier.

According to Fig. 44, although the process of obtaining the external information is carried out according to an input of the user, commanding the obtaining process, it may be initiated without receiving any trigger. In this case, terminal 4301 is placed in a hospital, for instance, and optical output unit 13 periodically produces an output indicating a health condition of a hospitalized patient.

Repeater unit 12 and optical output unit 13 operate in the like manner as those of the first exemplary embodiment, and their details are therefore omitted.

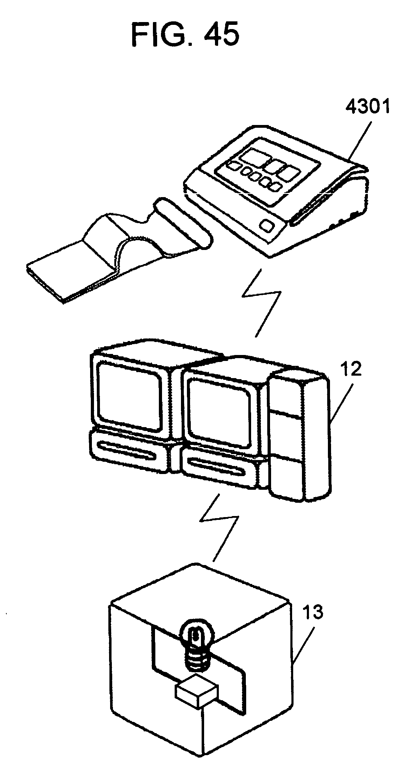

This information processing system operates in a manner which is described hereinafter more concretely. This information processing system has terminal 4301 (i.e., electronic health checker), repeater unit 12 and optical output unit 13, as shown in Fig. 45, and they transmit and receive information individually by the ordinary communications method or the broadcasting method.

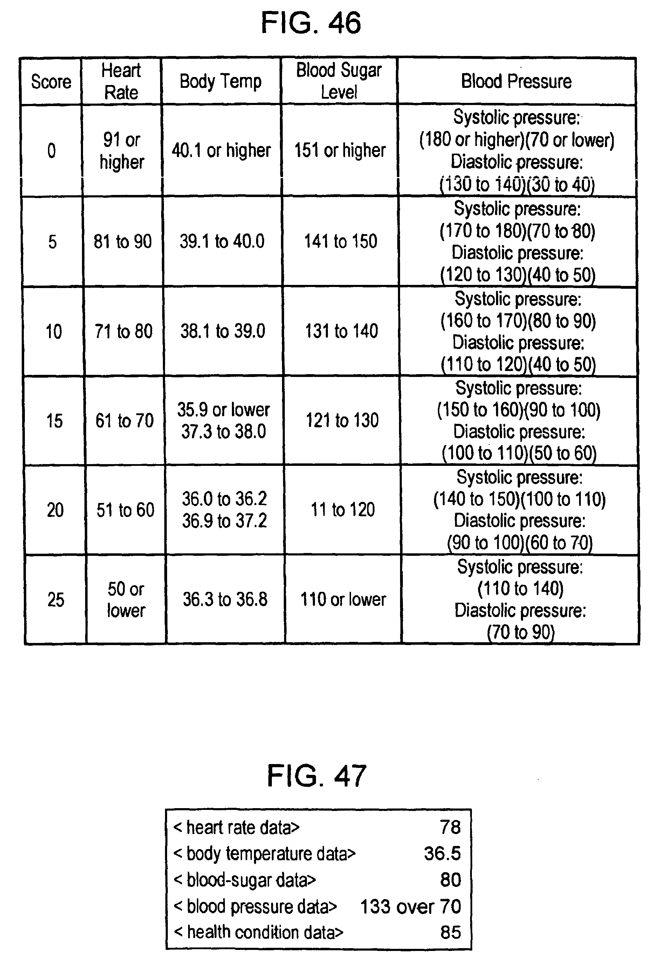

Terminal 4301 obtains a heart rate data, a body temperature data, a blood-sugar data and a blood pressure data, as described above. Acquiring section 430115 is provided with scores, each corresponding to a range of values of the heart rate data and the like, as shown in Fig. 46. Acquiring section 430115 sums up all scores corresponding to individual values of the heart rate data, the body temperature data, the blood-sugar data and the blood pressure data obtained in the steps of S4402 to S4405 to determine a health condition data. Description is given now on an example in which the heart rate data shows "78", the body temperature data "36.5", the blood-sugar data "80" and the blood pressure data "133 over 70". Scores corresponding to the heart rate data, the body temperature data, the blood-sugar data and the blood pressure data are "10", "25", "25" and "25" respectively, for a total score of "85". This total score of "85" represents a health condition data. The numerical value is a level indicating how healthy the entire body is on the basis of 100 points. The methods and processes of obtaining scores corresponding to the various data (e.g., heart rate data) and calculating the health condition data discussed above are illustrative and not restrictive, and there are still other methods to obtain the scores and the health condition data.

Composing section 430116 composes external information based on all or a part of the heart rate data, the body temperature data, the blood-sugar data, the blood pressure data and the health condition data. Fig. 47 shows an example of the composed external information. In Fig. 47, although the external information includes tagged data, the data layout and data structure of the external information are not specifically limited to it.

The above external information is transmitted to optical output unit 13 via repeater unit 12. Optical output unit 13 produces optical output according to all or a part of the received external information. The five kinds of optical output methods disclosed in the previous exemplary embodiments are used for this optical output. However, any other method may be used as long as it has an optical form capable of conveying the condition softly.

According to the present exemplary embodiment as described above, there is provided the communication system capable of transmitting information relating to a health condition of a human body from terminal 4301 to optical output unit 13, and thereby it conveys softly the health information of an individual who transmits the information to another individual who receives the information.

Description is provided of practical examples of using the system of this exemplary embodiment. Assume that an aged mother has terminal 4301, and a devoted child has optical output unit 13. The mother takes a measurement of blood pressure and the like several times a day, and transmits her health condition to the child. The child can learn the health condition of the mother implicitly through soft optical output.

In another example, two individuals in love with each other have terminal 4301 and optical output unit 13 respectively. In this case, a body temperature data of one of them can be transmitted to optical output unit 13 of the other. Optical output unit 13 then outputs light according to the body temperature to convey the intense feeling toward the lover.

In this exemplary embodiment, terminal 4301 is illustrated as having a shape of an ordinary electronic health checker as shown in Fig. 45. However, the shape can be a cubic configuration (i.e., regular hexahedral shape) and the like, and this is not restrictive. Terminal 4301 of a cubic shape can be grasped easily, and it is more useful if it can transmit "a heart rate data", "a body temperature data" and the like when it is simply grasped. That is, when the terminal of cube shape is grasped firmly, it senses a heart rate and a body temperature of the person who grasps it. The terminal then transmits an emotional uplift and warmth of the person to the optical output unit, which in turn softly produces optical output accordingly.

In this exemplary embodiment, although optical output device 13 is illustrated as having one optical output element, it may be provided with two or more elements. Two or more optical output elements can produce optical output for a plurality of data such as "heart rate data", "body temperature data" "health condition data" and the like.

Furthermore, description is provided of this exemplary embodiment as sending and receiving the heart rate data, the body temperature data, the blood-sugar data, the blood pressure data and the health condition data. However, it may need to send and receive only one or more of these data. Moreover, the system may be adapted for sending and receiving other kinds of measurable data of a human body, similar data on any animal such as a body fat ratio and the like.

(Eighth Exemplary Embodiment)

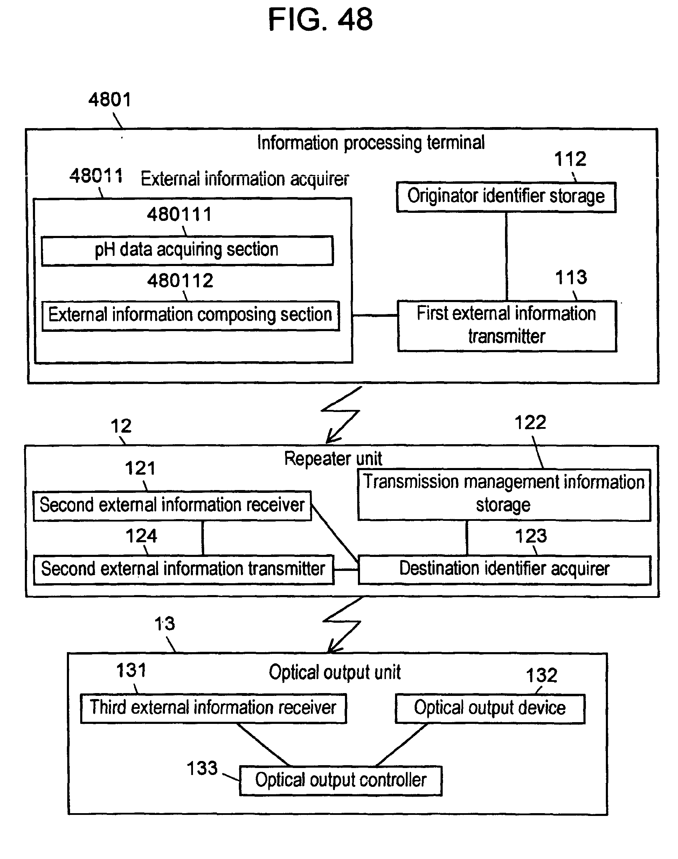

Fig. 48 shows a block diagram of an information processing system according to the eighth exemplary embodiment. This information processing system has information processing terminal 4801 (hereafter referred to as "terminal"), repeater unit 12 and optical output unit 13.

Terminal 4801 has external information acquirer 48011 ("acquirer"), originator identifier storage 112 ("storage") and first external information transmitter 113 ("transmitter").

Acquirer 48011 has pH data acquiring section 480111 ("acquiring section") and external information composing section 480112 ("composing section").

Acquiring section 480111 measures a pH value of terminal 4801. Since acquiring section 480111 can be composed by using the known technique, its details is skipped here.

Composing section 480112 composes external information based on the pH value measured by acquiring section 480111.

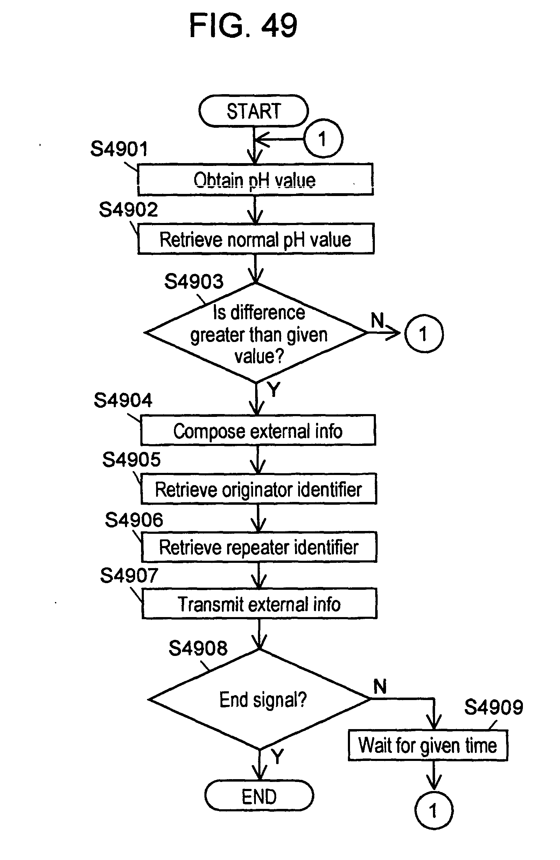

Terminal 4801 operates in a manner which is described hereinafter with reference to a flowchart of Fig. 49.

(S4901) Acquiring section 480111 obtains a pH value of terminal 4801.

(S4902) Acquirer 48011 retrieves another pH value stored in advance in composing section 480112. This value here is called "a normal pH value" for the sake of convenience.

(S4903) Acquirer 48011 determines whether or not there is a difference of a predetermined value or greater between the pH value obtained in S4901 and the normal pH value retrieved in S4902. The process advances to S4904 if the difference is equal to or greater than the predetermined value, or the process returns to S4901 if it is.

(S4904) Composing section 480112 composes external information based on the pH value obtained in S4401.

(S4905) Transmitter 113 retrieves an originator identifier from storage 112.

(S4906) Transmitter 113 retrieves a repeater identifier representing information for identifying a repeater unit. The repeater identifier is stored in advance in a memory, although not shown in the figure.

(S4907) Transmitter 113 transmits the external information and the originator identifier to repeater unit 12 which is identified by the repeater identifier.

(S4908) Acquirer 48011 determines whether or not it has received an end signal. The process is terminated if it has received the end signal, or the process advances to S4909 if it has not.

(S4909) The process enters into a waiting period of a given time.

The process of obtaining the pH value is carried out without receiving any trigger according to Fig. 49. However, the above process may be initiated by a trigger produced when a user of terminal 4801 presses a start button or the like. Alternatively, the process of obtaining the pH value in S4901 may be initiated when terminal 4801 receives a triggering signal from any of optical output unit 13, repeater unit 12 and other devices.

According to Fig. 49, terminal 4801 compares the obtained pH value with the normal pH value, and transmits the obtained pH value to optical output unit 13 by way of repeater unit 12 when the difference is equal to or greater than the predetermined value. However, terminal 4801 may transmit the obtained pH value unconditionally to optical output unit 13.

The information processing system of this exemplary embodiment operates in a manner as described hereinafter. Terminal 4801 of this information processing system has a function of measuring a pH value as described above. Usually, a pH value of terminal 4801 changes substantially, if it is licked. This act of licking causes terminal 4801 to transmit the pH value to optical output unit 13 for making optical output. Optical output unit 13 softly outputs light according to the pH value taken when being licked.

According to this exemplary embodiment as described above, terminal 4801 transmits the external information including the pH value to optical output unit 13. As a result, optical output unit 13 visually produces optical output softly to indicate the fact that a user of terminal 4801 licks the terminal 4801 and the measured pH value. This function, if used between two specially related individuals, can optically convey softly an expression of one's affections by way of licking.

When terminal 4801 is used for a pet animal, it transmits a pH value taken when licked by the pet to optical output unit 13, which in turn displays it softly with light. In other words, it can implicitly convey a health condition of the pet.

In addition, terminal 4801 is used for a baby, a lovely act of the baby of licking terminal 4801 is optically conveyed softly to grandparents in a remote location or parents in another remote location in a given circumstance. The system can thus provide the grandparents and the like with pleasing and relief.

(Ninth Exemplary Embodiment)

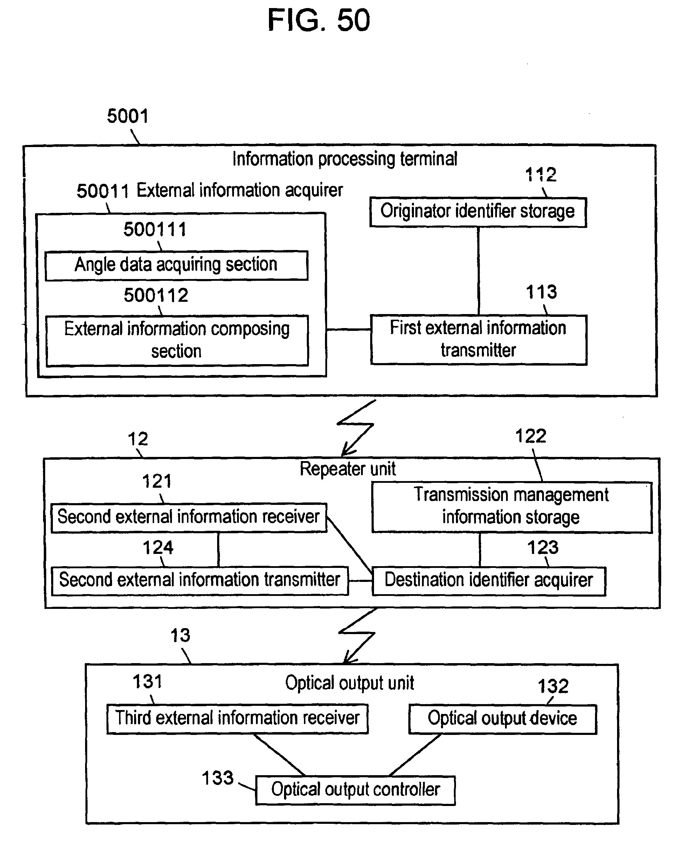

Fig. 50 shows a block diagram of an information processing system according to this exemplary embodiment. This information processing system has information processing terminal 5001 (hereinafter referred to as "terminal"), repeater unit 12 and optical output unit 13.

Terminal 5001 has external information acquirer 50011 (hereinafter "acquirer"), originator identifier storage 112 ("storage") and first external information transmitter 113 ("transmitter").

Acquirer 50011 has angle data acquiring section 500111 ("acquiring section") and external information composing section 500112 ("composing section").

Acquiring section 500111 obtains an angle data representing information on an angle of terminal 5001. The angle data is a change in horizontal angle (i. e., inclination), for instance. The angle data can be an angular rate, or it can also be a data of absolute angle instead of the change in horizontal angle. Acquiring section 500111 may be achieved with a gyrocompass, for instance. Or, the acquiring section 500111 may be composed of a clinometer. Since both the gyrocompass and the clinometer are prior art devices, detailed descriptions are skipped here. The gyrocompass for use as acquiring section 500111 can be any of a mechanical gyrocompass and an optical gyroscopic compass.

Composing section 500112 composes external information based on the angle data taken by acquiring section 500111.

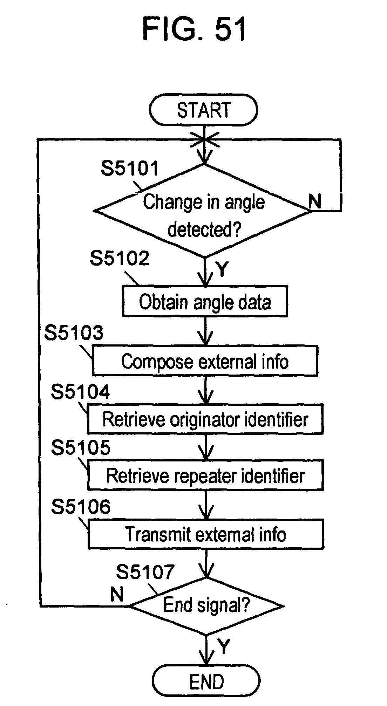

Terminal 5001 operates in a manner as described hereinafter with reference to Fig. 51.

(S5101) Acquiring section 500111 determines whether or not it has detected a change in angle. The process advances to S5102 if it has detected a change in angle, or the process remains in S5101 if it has not.

(S5102) Acquiring section 500111 obtains an angle data.

(S5103) Composing section 500112 composes external information based on the angle data acquired in S5102.

(S5104) Transmitter 113 retrieves an originator identifier from storage 112.

(S5105) Transmitter 113 retrieves a repeater identifier representing information for identifying a repeater unit. The repeater identifier is stored in advance in a memory device, though not shown in the figure.

(S5106) Transmitter 113 transmits the external information and the originator identifier to repeater unit 12 identified by the repeater identifier.

(S5107) Acquirer 50011 determines whether or not it has received an end signal. The process is terminated if it has received an end signal, or the process returns to S5101 if it has not.

According to Fig. 51, terminal 5001 obtains the angle data upon detection of the change in angle as a trigger. However, terminal 5001 may obtain the angle data and transmit it to the optical output unit without using any trigger. Alternatively, terminal 5001 may obtain the angle data and transmit it to the optical output unit when it receives a triggering signal from any of optical output unit 13, repeater unit 12 and other devices.

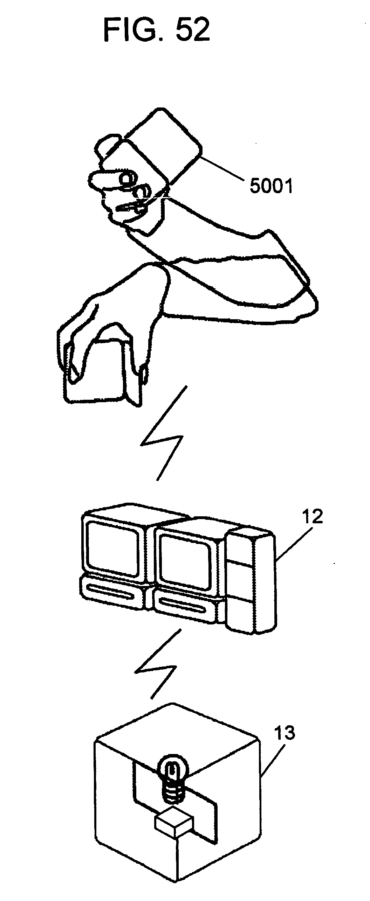

The information processing system according to this exemplary embodiment operates in a manner which is described hereinafter with reference to Fig. 52. Terminal 5001 of this information processing system has a cubic shape. Assume that a user of terminal 5001 holds and shakes the cubic shape terminal 5001. When this happens, terminal 5001 detects an angle data caused by the shaking, composes external information by taking the angle data, and transmits the external information to optical output unit 13.

According to this exemplary embodiment as described above, terminal 5001 transmits a degree of shaking motion to optical output unit 13 when it is shaken, and optical output unit 13 outputs light to softly show intensity of the shaking motion. Assume an example that one of individuals in love has terminal 5001, and another individual has optical output unit 13. One way of using this system in this instance is that the one holding terminal 5001 convey her/his desire of seeing the other by shaking terminal 5001. The other having optical output unit 13 can learn softly that the loved one wishes to see him/her.

In this exemplary embodiment, although acquiring section 500111 primarily obtains information on change in angle, it may be designed to obtain an absolute angle of terminal 5001, so that a change in the angle can be calculated in repeater unit 12 or the like. In other words, terminal 5001 can have a simple structure to obtain the angle, and it transmits the angle data to repeater unit 12. Repeater unit 12 calculates a change in the angle based on a plurality of angle data on the time series. Repeater unit 12 then computes a data indicating that terminal 5001 is shaken, and transmits the data to optical output unit 13. Optical output unit 13 thus produces optical output according to the data. This system can simplify the structure of terminal 5001.

(Tenth Exemplary Embodiment)

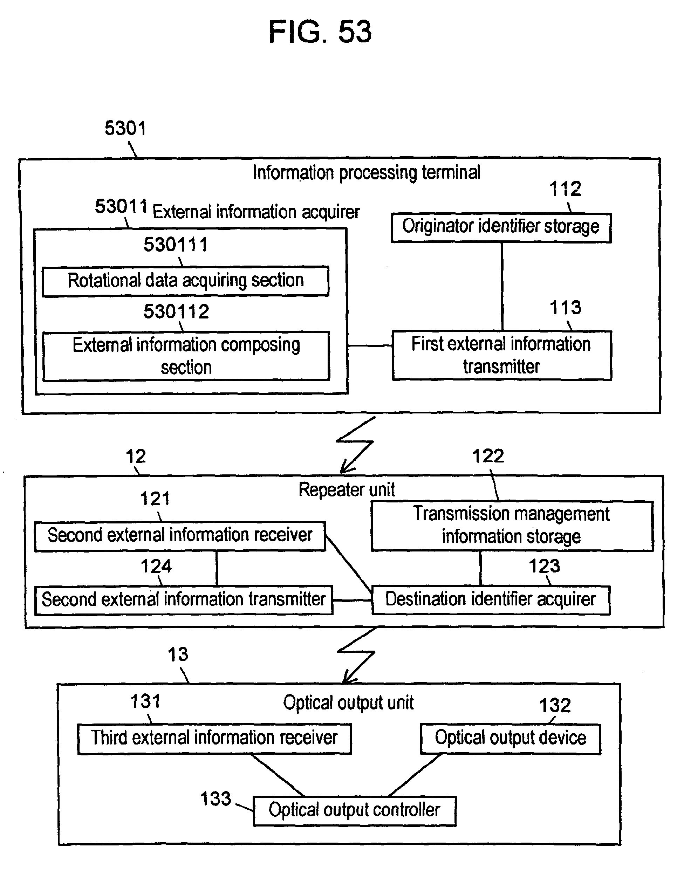

Fig. 53 shows a block diagram of an information processing system according to this exemplary embodiment. This information processing system has information processing terminal 5301 (hereinafter referred to as "terminal"), repeater unit 12 and optical output unit 13.

Terminal 5301 has external information acquirer 53011 ("acquirer"), originator identifier storage 112 ("storage") and first external information transmitter 113 ("transmitter").

Acquirer 53011 has rotational data acquiring section 530111 ("acquiring section") and external information composing section 530112 ("composing section").

Acquiring section 530111 obtains a rotational data representing information on rotation of a windmill or the like, for instance, disposed to terminal 5301. The rotational data includes any of a rotational speed, a number of revolutions and the like. Since there are well-known techniques for detecting rotational speed and number of revolutions, detailed description of them will be skipped here.

Composing section 530112 composes external information based on a rotational data obtained by acquiring section 530111. Although composing section 530112 is usually materialized with software, it may be composed of a specially designed circuit (i.e., hardware).

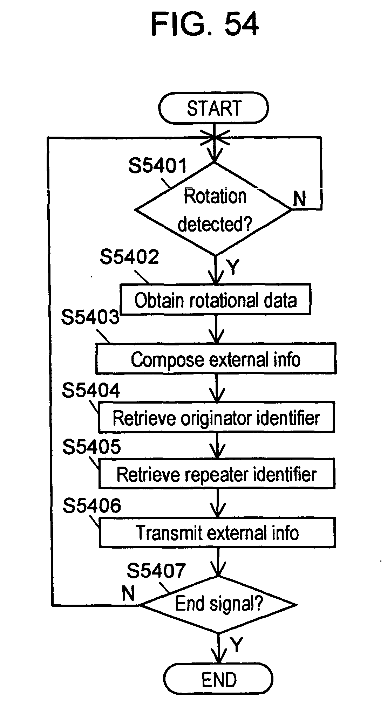

Terminal 5301 operates in a manner which is described hereinafter with reference to a flowchart of Fig. 54.

(S5401) Acquiring section 530111 determines whether or not it has detected rotation. The process advances to S5402, if it has detected rotation, or the process remains in S5401 if it has not.

(S5402) Acquiring section 530111 obtains a rotational data.

(S5403) Composing section 530112 composes external information based on the rotational data obtained in S5402.

(S5404) Transmitter 113 retrieves an originator identifier from storage 112.

(S5405) Transmitter 113 retrieves a repeater identifier representing a date used to identify the repeater unit. The repeater identifier is stored beforehand in a memory, though not shown in the figure.

(S5406) Transmitter 113 transmits the external information and the originator identifier to repeater unit 12 identified by the repeater identifier.

(S5407) Acquirer 53011 determines whether or not it received an end signal. The process is terminated if it has received the end signal, or the process returns to S5401 if it has not.

According to Fig. 54, terminal 5301 obtains the rotational data upon detection of rotation as a trigger. However, terminal 5301 may obtain the rotational data (including a case in which a value of data is 0), and transmit it to optical output unit 13 without receiving any trigger. Alternatively, terminal 5301 may obtain the rotational data and transmit to optical output unit 13 when it receives a triggering signal from any of optical output unit 13, repeater unit 12 and other devices.

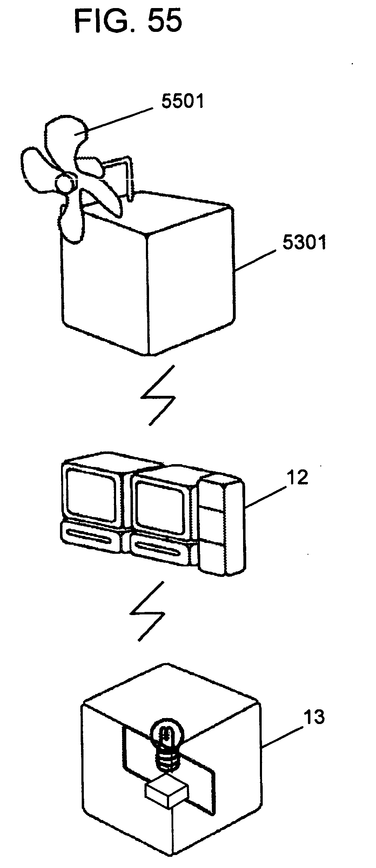

Description is provided hereinafter in more concretely of an operation of the information processing system of this exemplary embodiment. Terminal 5301 of this information processing system has a cubic shape, for instance, and windmill 5501 is electrically connected to it as shown in Fig. 55. Terminal 5301 is provided with a mechanism that detects a rotational speed when windmill 5501 rotates with a wind. Terminal 5301 transmits a rotational data representing information on the rotational speed to optical output unit 13. Optical output unit 13 thus produces optical output to show the rotational speed softly.

According to this exemplary embodiment as described above, when terminal 5301 receives a wind, windmill 5501 rotates and its rotational speed is transmitted to optical output unit 13 softly. Assume, for instance, that a given individual carrying terminal 5301 is outside on the job at an elevated place, and another individual, who cares about him/her has optical output unit 13. In this situation, the rotational data is conveyed in a form of variation in optical intensity, frequency of blinking, or the like. The individual holding optical output unit 13 can thus imagine vaguely how the one is working outside at the highly elevated place.

In another example, assume that a woman carries terminal 5301, and a man of her close acquaintance has optical output unit 13. She blows on windmill 5501 of terminal 5301 when she wants to convey her willingness to see him. When she blows on windmill 5501, optical output unit 13 illuminates as its optical output is controlled accordingly, to thus softly and implicitly convey her desire of seeing him.

(Eleventh Exemplary Embodiment)

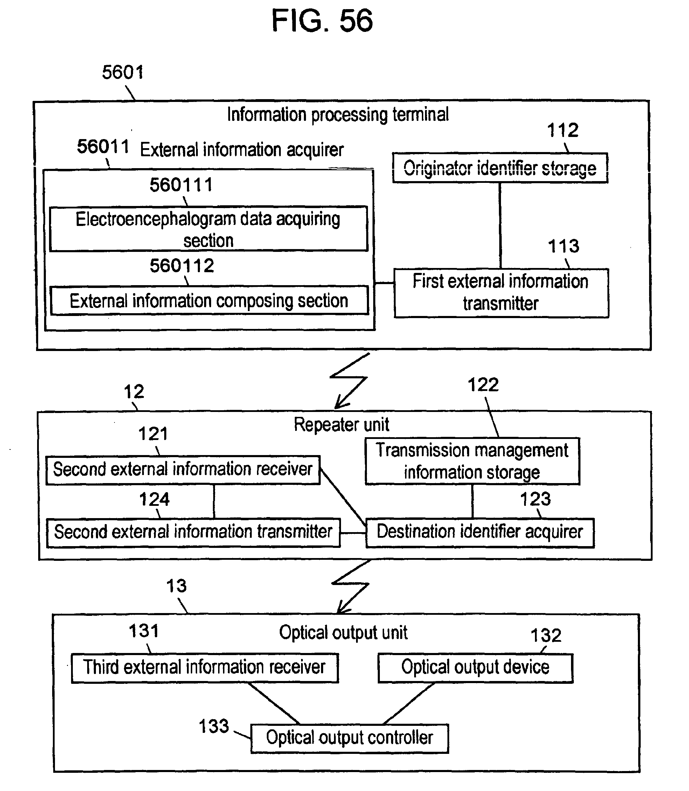

Fig. 56 shows a block diagram of an information processing system according to the eleventh exemplary embodiment. This information processing system has information processing terminal 5601 (referred to as "terminal"), repeater unit 12 and optical output unit 13.

Terminal 5601 has external information acquirer 56011 ("acquirer"), originator identifier storage 112 ("storage") and first external information transmitter 113 ("transmitter").

Acquirer 56011 has electroencephalogram data acquiring section 560111 ("acquiring section") and external information composing section 530112 ("composing section").

Acquiring section 560111 reads an electroencephalogram and obtains an electroencephalogram data. Since the technique of electroencephalography is well known, detailed description of it is skipped here.

Composing section 560112 composes external information based on the electroencephalogram data obtained by acquiring section 560111. Although composing section 560112 is usually materialized with software, it may be composed of a specially designed circuit (i.e., hardware).

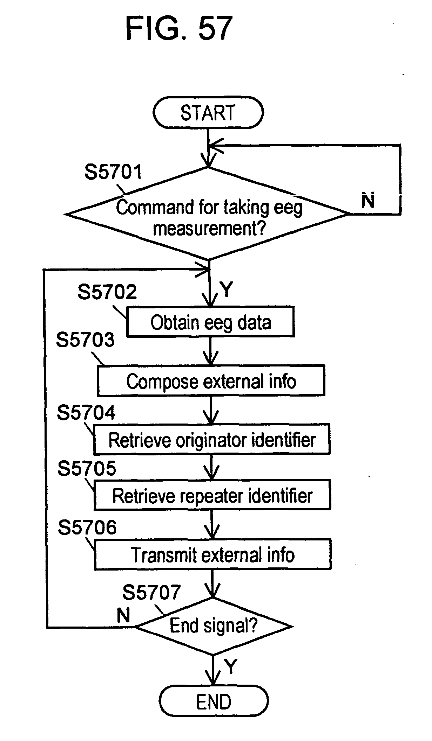

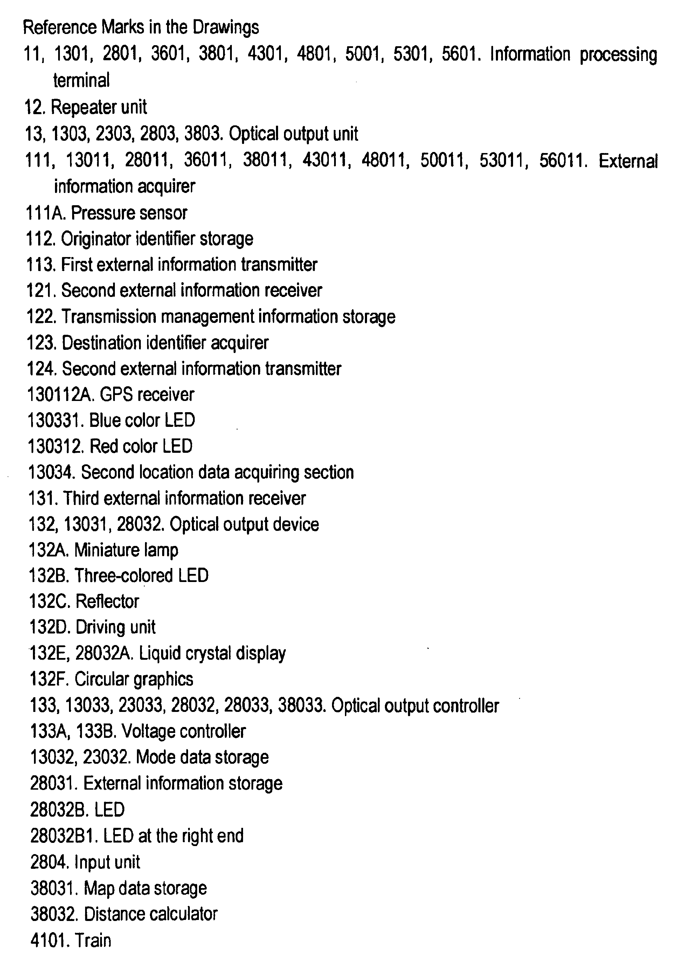

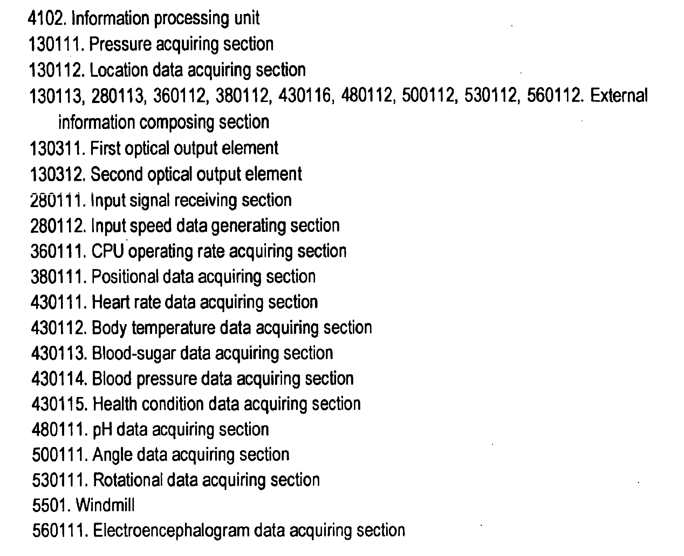

Terminal 5601 operates in a manner which is described hereinafter with reference to Fig. 57.

(S5701) Acquiring section 560111 determines whether or not it has received a command for taking a measurement of electroencephalogram. The process advances to S5702, if it has received a command, or the process remains in S5701 if it has not.

(S5702) Acquiring section 560111 obtains an electroencephalogram data.

(S5703) Composing section 560112 composes external information based on the electroencephalogram data obtained in the step of S5702.

(S5704) Transmitter 113 retrieves an originator identifier from storage 112.

(S5705) Transmitter 113 retrieves a repeater identifier representing information that identifies a repeater unit. The repeater identifier is stored in advance in a memory though not shown in the figure.

(S5706) Transmitter 113 transmits the external information and the originator identifier to repeater unit 12 which is identified by the repeater identifier.

(S5707) Acquirer 56011 determines whether or not it has received an end signal. The process is terminated if it has received the end signal, or the process returns to S5701 if it has not.

According to Fig. 57, terminal 5601 starts the process of obtaining an electroencephalogram data upon receipt of a command. However, terminal 5601 may start obtaining the electroencephalogram data, and transmit it to optical output unit 13 without receiving any trigger. Alternatively, terminal 5601 may obtain the electroencephalogram data and transmit to optical output unit 13 when it receives a triggering signal from any of optical output unit 13, repeater unit 12 and other devices.

According to this exemplary embodiment as described above, an electroencephalogram data of one person is transmitted to another person, and it is optically informed to the other person softly, so as to make a condition of brain of the one person known implicitly to the other person. For instance, the system optically transfers magnitudes of alpha wave as well as beta wave detected from one person, and softly conveys degrees of tension, stress and the like of the person to the other. Assume an instance that a husband keeps terminal 5601, and his wife has optical output unit 13. A degree of stress of the husband during work hours is then transmitted implicitly to the wife. The wife considers a dinner recipe taking into account the stress of her husband on that day. Or, she considers various measures for relaxing him after he comes home. The above are some of the advantages of this system.

INDUSTRIAL APPLICABILITY

According to the present invention, an information processing terminal transmits information of a condition of a user of the terminal, and an optical output unit displays it softly with optical output, and thereby it makes soft communications possible.

**Claims**

1. An optical output unit comprising:

   an external information receiver for receiving external information representing a data transmitted from outside;
   an optical output device for outputting light; and
   an optical output controller for performing multistage control, wherein the controller makes the optical output device produce at least one mode of optical output among at least three different modes of the optical output according to the external information.

2. The optical output unit of claim 1, wherein the external information is composed based on a plurality of data transmitted from the outside.

3. The optical output unit of claim 1, wherein the optical output device includes optical output elements for outputting light,
   the external information includes a mode data representing a kind of information and a data value indicating a magnitude of the information represented by the mode data, and
   the optical output controller controls optical outputs of the optical output elements according to the mode data and the data value included in the external information received by the external information receiver.

4. The optical output unit of claim 3 further comprising a mode data storage for storing a mode data of the external information, wherein
   the optical output controller gives a command to the optical output device for producing optical output only when the mode data included in the external information received by the external information receiver has a predetermined relation to the mode data stored in the mode data storage.

5. The optical output unit of claim 4, wherein the optical output controller has a function of controlling the optical output in a plurality of methods,
   the mode data storage stores optical output method identifiers for identifying respective methods of controlling the optical output in a correlating manner with the mode data, and
   only when the mode data included in the external information received by the external information receiver has a predetermined relation to any of the mode data stored in the mode data storage, the optical output controller gives a command to the optical output device for production of the optical output according to one of the methods identified by an optical output method identifier corresponding to the mode data.

6. The optical output unit of claim 1 further comprising an external information storage for storing the external information received by the external information receiver, wherein
   the optical output controller controls optical output of the optical output device according to at least one of the external information stored in the external information storage and the external information received by the external information receiver.

7. The optical output unit of claim 1, wherein the optical output controller gives a command for producing optical output in one level of intensity among at least three different levels in the multistage control.

8. The optical output unit of claim 1, wherein the optical output controller gives a command for producing optical output in one color of light among at least three different colors in the multistage control.

9. The optical output unit of claim 1, wherein the optical output controller gives a command for producing optical output in one mode of blinking among at least three different modes in the multistage control.

10. The optical output unit of claim 1, wherein the optical output controller gives a command for producing optical output in one way of turning a light source among at least three different ways of turning in the multistage control.

11. The optical output unit of claim 1, wherein the optical output controller gives a command for producing optical output in one area size of light source among at least three different area sizes in the multistage control.

12. The optical output unit of claim 1, wherein the external information includes information representing a speed of incoming data input through an input unit for data entry.

13. The optical output unit of claim 1, wherein the external information includes information representing an operating rate of a CPU.

14. The optical output unit of claim 1, wherein the external information includes a location data representing information on a location.

15. The optical output unit of claim 1, wherein the external information includes a positional data representing information on a place.

16. The optical output unit of claim 1, wherein the external information includes a pressure data representing information on a pressure.

17. The optical output unit of claim 1, wherein the external information includes a heart rate data representing information on a heart rate.

18. The optical output unit of claim 1, wherein the external information includes a body temperature data representing information on a body temperature.

19. The optical output unit of claim 1, wherein the external information includes a blood-sugar data representing information on a blood-sugar.

20. The optical output unit of claim 1, wherein the external information includes a health condition data representing information on a health condition.

21. The optical output unit of claim 1, wherein the external information includes a pH value data representing information on a pH value.

22. The optical output unit of claim 1, wherein the external information includes an angle data representing information on an angle.

23. The optical output unit of claim 1, wherein the external information includes a rotational data representing information on rotation.

24. The optical output unit of claim 1, wherein the external information includes an electroencephalogram data representing information on electroencephalograph.

25. The optical output unit of claim 1 having any of a cubic shape, a rectangular hexahedral shape and a spherical shape.

26. A repeater unit for receiving external information from the outside and transmitting the external information to the optical output unit of claim 1, the repeater unit comprising:

an external information receiver for receiving an originator identifier for identifying an originator of the external information along with the external information;
a transmission management information storage for storing transmission management information containing a combination of a destination identifier for identifying a destination of the external information and the originator identifier;
a destination identifier acquirer for retrieving the destination identifier in combination with the originator identifier from the transmission management information storage; and
an external information transmitter for transmitting the external information to the destination identified by the destination identifier.

27. A repeater unit for receiving external information from the outside and transmitting the external information to the optical output unit of claim 1, the repeater unit comprising:

an external information receiver for receiving a destination identifier for identifying a destination of the external information along with the external information; and
an external information transmitter for transmitting the external information to the destination identified by the destination identifier.

28. A repeater unit for transmitting external information to the optical output unit of claim 2, the repeater unit comprising:

an external information receiver for receiving a plurality of the external information;
an external information storage for storing the plurality of external information received by the external information receiver;

an external information composer for composing new external information representing a parameter used for optical control based on the plurality of external information stored in the external information storage; and

an external information transmitter for transmitting the external information composed by the external information composer.

29. An information processing terminal for use in an information processing system having the optical output unit of claim 1, the terminal comprising:

an external information acquirer for obtaining external information; and

a storage device for storing any of an originator identifier for identifying the information processing terminal and a destination identifier for identifying a destination of the external information, wherein

the information processing terminal transmits the obtained external information together with any of the originator identifier and the destination identifier stored in the storage device.

30. The information processing terminal of claim 29, wherein the external information includes a mode data and a data value.

31. The information processing terminal of claim 29, wherein the external information acquirer comprises:

an input signal receiving section for receiving a signal of incoming data input through an input unit for data entry; and

an external information generating section for generating external information based on the input signal received in the input signal receiving section.

32. The information processing terminal of claim 29, wherein the external information acquirer comprises a CPU operating rate acquiring section for obtaining an operating rate data representing information on an operating rate of a CPU, and

the external information includes the operating rate data.

33. The information processing terminal of claim 29, wherein the external information acquirer comprises a location data acquiring section for obtaining a location data representing information on a location of the information processing terminal, and

the external information includes the location data.

34. The information processing terminal of claim 29, wherein the external information acquirer comprises a positional data acquiring section for obtaining a positional data representing information on a place where the information processing terminal is placed, and

the external information includes the positional data.

35. The information processing terminal of claim 29, wherein the external information acquirer comprises a pressure acquiring section for obtaining a pressure data representing information on a pressure applied to the information processing terminal, and

the external information includes the pressure data.

36. The information processing terminal of claim 29, wherein the external information acquirer comprises a heart rate data acquiring section for obtaining a heart rate data, and

the external information has includes the heart rate data.

37. The information processing terminal of claim 29, wherein the external information acquirer comprises a body temperature data acquiring section for obtaining a body temperature data, and

the external information includes the body temperature data.

38. The information processing terminal of claim 29, wherein the external information acquirer comprises a blood-sugar data acquiring section for obtaining a blood-sugar data, and

the external information includes the blood-sugar data.

39. The information processing terminal of claim 29, wherein the external information acquirer comprises a health condition data acquiring section for obtaining a health condition data, and

the external information includes the health condition data.

40. The information processing terminal of claim 29, wherein the external information acquirer comprises a pH value acquiring section for obtaining a pH value, and

the external information includes the pH value.

41. The information processing terminal of claim 29, wherein the external information acquirer comprises an angle data acquiring section for obtaining an angle data representing information on inclination of the information processing terminal, and

the external information includes the angle data.

**42.** The information processing terminal of claim 29, wherein the external information acquirer comprises a rotational data acquiring section for obtaining a rotational data representing information on rotation, and

the external information includes the rotational data.

**43.** The information processing terminal of claim 29, wherein the external information acquirer comprises an electroencephalogram data acquiring section for obtaining an electroencephalogram, and

the external information includes an electroencephalogram data representing information on the electroencephalogram.

**44.** The information processing terminal of claim 29 having any of a cubic shape, a rectangular hexahedral shape and a spherical shape.

**45.** A computer-readable program for controlling an optical output unit, the program comprising the steps of:

receiving external information transmitted from the outside; and
controlling optical output in a multistage mode according to the external information.

**46.** The program of claim 45, wherein the external information includes a mode data representing a kind of information and a data value indicating a magnitude of the information represented by the mode data, and

the step of controlling optical output is carried out according to the mode data and the data value.

**47.** The program of claim 45, wherein the step of controlling optical output is carried out by a command of directing optical output provided only when a mode data included in the external information received in the step of receiving external information has a predetermined relation to another mode data stored beforehand.

**48.** The program of claim 47 further comprising a step of storing an optical output method identifier for identifying each of optical output methods in a correlating manner with the mode data, and

the step of controlling optical output is carried out by a command of directing optical output according to one of the optical output methods identified by an optical output method identifier corresponding to the received mode data.

**49.** The program of claim 45 further comprising a step of storing at least a part of the external information received in the step of receiving external information, and

the step of controlling optical output is carried out according to at least one of the external information stored in the step of storing the external information and the external information received in the step of receiving external information.

EP 1 482 463 A1

# FIG. 1

**11**

**Information processing terminal**

**111** External information acquirer

**112** Originator identifier storage

**113** First external information transmitter

**12**

**Repeater unit**

**121** Second external information receiver

**122** Transmission management information storage

**124** Second external information transmitter

**123** Destination identifier acquirer

**13**

**Optical output unit**

**131** Third external information receiver

**132** Optical output device

**133** Optical output controller

27

# FIG. 2

START

S201 — External info obtained? — N

Y

S202 — Retrieve originator identifier

S203 — Retrieve repeater identifier

S204 — Transmit external info and originator identifier

END

# FIG. 3

START

S301 — External info received? — N

Y

S302 — Obtain originator identifier

S303 — Obtain destination identifiers

S304 — Transmit external info

END

# FIG. 4

```
                    ┌──────────────┐
                    │    START     │
                    └──────────────┘
                           │
   S401                    ▼
          ┌────────────────────────────┐
          │      External info         │  N
          │       received?            │──┐
          └────────────────────────────┘  │
                    │ Y                    │
   S402             ▼                      │
          ┌────────────────────────────┐  │
          │ Determine control parameter│  │
          └────────────────────────────┘  │
   S403             │                      │
                    ▼                      │
          ┌────────────────────┐           │
          │   Optical output   │           │
          └────────────────────┘           │
   S404             │                      │
                    ▼                      │
          ┌────────────────────────────┐   │
          │        End signal?         │ N │
          └────────────────────────────┘──┘
                    │ Y
                    ▼
            ┌──────────────┐
            │     END      │
            └──────────────┘
```

# FIG. 5

# FIG. 6

# FIG. 7

| Obtained External Information | External Information to be Transmitted |
|---|---|
| (10,20,10,10,10,0) | 10 |

# FIG. 8

| Received External Information | Voltage |
|---|---|
| 20 or less | Value of received external information |
| Larger than 20 | 20 |

# FIG. 9

# FIG. 10

| Received External Information | Blinking Mode |
|---|---|
| 0 | ON ——————————————— OFF ▬▬▬▬▬▬▬▬▬▬ |
| 1 | ON (9 — 1 — 9 — 1 — 9 — 1) |
| 2 | ON (8 — 2 — 8 — 2 — 8 — 2) |
| 3 | ON (7 — 3 — 7 — 3 — 7 — 3) |
| ⋮ | |
| 9 | ON (9 — 1 — 9 — 1 — 9 — 1) |
| 10 or larger | ON ▬▬▬▬▬▬▬▬▬▬ OFF ——————————————— |

EP 1 482 463 A1

## FIG. 11

## FIG. 12

33

EP 1 482 463 A1

# FIG. 13

1301

**Information processing terminal**

13011

**External information acquirer**

130111

Pressure acquiring section

130112

Location data acquiring section

130113

External information composing section

112

Originator identifier storage

113

First external information transmitter

12

**Repeater unit**

121

Second external information receiver

124

Second external information transmitter

122

Transmission management information storage

123

Destination identifier acquirer

1303

**Optical output unit**

131

Third external information receiver

13032

Mode data storage

13031

Optical output device

130311

First optical output element

130312

Second optical output element

13033

Optical output controller

34

# FIG. 14

START

S1401 — Obtain location data

S1402 — Pressure data input? — N

S1403 — Generate pressure data — Y

S1404 — Compose external info

S1405 — Transmit external info

END

## FIG. 15

START

S1501 — External info received? → N

↓ Y

S1502 — "i" ← 1

S1503 — "i"-th mode data and data value available? → N

↓ Y

S1504 — Obtain mode data and data value

S1505 — Obtained mode data has a relation to stored mode data? → N

↓ Y

S1506 — Determine control parameter

S1507 — Optical output

S1508 — "i" ← "i"+1

S1509 — End signal? → N

↓ Y

END

# FIG. 16

# FIG. 17

| Data of sensor 1 | Data of sensor 2 | ...... | Data of sensor 6 |
|---|---|---|---|

# FIG. 18

| 0 | 0 | 20 | 5 | 5 | 20 |
|---|---|---|---|---|---|

## FIG. 19

| X (Latitude) | Y (Longitude) | Z (Altitude) |
|:---:|:---:|:---:|
| 136 | 110 | 5 |

## FIG. 20

| Mode data | ID | Data value |
|:---:|:---:|:---:|
| Location data | 2 | (136,110,5) |
| Pressure data | 1 | 12.5 |

## FIG. 21

# FIG. 22

1303

# FIG. 23

**1301**

**Information processing terminal**

**13011** External information acquirer

**112** Originator identifier storage

**130111** Pressure acquiring section

**130112** Location data acquiring section

**130113** External information composing section

**113** First external information transmitter

**12** Repeater unit

**121** Second external information receiver

**122** Transmission management information storage

**124** Second external information transmitter

**123** Destination identifier acquirer

**2303** Optical output unit

**131** Third external information receiver

**13031** Optical output device

**130311** First optical output element

**23032** Mode data storage

**130312** Second optical output element

**23033** Optical output controller

## FIG. 24

```
                    START

S2401
              External info          N
              received?

                   Y
S2402
              "i" ← 1

S2403
                   "i"-th
              mode data and data value      N
              available?

                   Y
S2404
         Obtain mode data and data value

S2405

      N
            Obtained mode data has a relation
               to stored mode data?

                                  Y
S2406
         Determine control parameter

S2407
            Optical output

S2408
            "i" ← "i"+1

S2409
      N
            End signal?

                   Y
                  END
```

# FIG. 25

| Optical output element identifier | Mode data | Optical output method identifier |
|---|---|---|
| First optical output element | Pressure data | Blinking |
| Second optical output element | Location data | Turning |

# FIG. 26

| Optical output method identifier |
|---|
| Intensity of light |
| Color of light |
| Blinking of light |
| Turning of light |
| Dimension of light |

# FIG. 27

| Mode data and optical output method identifier setting panel | | |
|---|---|---|
| Select desired mode data and/or optical output method identifier | | |
| Optical output element | Mode data | Optical output method identifier |
| 1sr optical output element | Pressure data | Blinking of light |
| 2nd optical output element | Location data | |

| Menu |
|---|
| Intensity of light |
| Color of light |
| Blinking of light |
| Turning of light |
| Dimension of light |

Enter

# FIG. 28

# FIG. 29

2804

Input unit

2801

Information processing terminal

28011    External information

112    Originator identifier storage

280111    Input signal receiving section

280112    Input speed data generating section

280113    External information composing section

113    First external information transmitter

12    Repeater unit

121    Second external information receiver

122    Transmission management information storage

124    Second external information transmitter

123    Destination identifier acquirer

2803    Optical output unit

131    Third external information receiver

28032    Optical output device

28031    External information storage

28033    Optical output controller

# FIG. 30

START

S3001 — Set timer to "0"

S3002 — Input received? — N

S3003 — Obtain input signal (Y)

S3004 — Generate input speed data

S3005 — Compose external info

S3006 — Retrieve originator identifier

S3007 — Retrieve repeater identifier

S3008 — Transmit external info and originator identifier

S3009 — Wait for counting of timer

S3010 — End signal? — N / Y

END

# FIG. 31

```
        ┌────────────┐
        │   START    │
        └─────┬──────┘
              │
              ▼
  S3101    ◇ External info ◇──N──┐
           ◇ received?    ◇      │
              │ Y                │
              ▼                  │
  S3102  ┌──────────────────┐    │
         │ Store external   │    │
         │      info        │    │
         └────────┬─────────┘    │
                  ▼              │
  S3103 ┌────────────────────────────┐
        │ Read historical data of    │
        │      external info         │
        └──────────┬─────────────────┘
                   ▼
  S3104 ┌────────────────────────┐
        │ Determine control      │
        │      parameter         │
        └──────────┬─────────────┘
                   ▼
  S3015 ┌────────────────┐
        │ Optical output │
        └────────┬───────┘
                 ▼
  S3016   N ◇ End signal? ◇
          └──◇           ◇
                 │ Y
                 ▼
        ┌────────────┐
        │    END     │
        └────────────┘
```

# FIG. 32

| Time | External information |
|------|----------------------|
| 9:01 | 3 |
| 9:02 | 10 |
| 9:03 | 61 |
| 9:04 | 74 |
| ⋮ | ⋮ |
| 10:00 | 123 |

# FIG. 33

# FIG. 34

FIG. 35

# FIG. 36

3601

Information processing terminal

36011

External information acquirer

360111

CPU operating rate acquiring section

360112

External information composing section

112

Originator identifier storage

113

First external information transmitter

12

Repeater unit

121

Second external information receiver

124

Second external information transmitter

122

Transmission management information storage

123

Destination identifier acquirer

13

Optical output unit

131

Third external information receiver

132

Optical output device

133

Optical output controller

# FIG. 37

START

S3701 — Start signal? — N

Y

S3702 — Obtain CPU operating rate

S3703 — Compose external info

S3704 — Retrieve originator identifier

S3705 — Retrieve repeater identifier

S3706 — Transmit external info and originator identifier

S3707 — End signal? — N

Y

END

# FIG. 38

**3801**

**Information processing terminal**

**38011** External information acquirer

**112** Originator identifier storage

**380111** Positional data acquiring section

**360112** External information composing section

**113** First external information transmitter

---

**12** Repeater unit

**122** Transmission management information storage

**121** Second external information receiver

**124** Second external information transmitter

**123** Destination identifier acquirer

---

**3803** Optical output unit

**131** Third external information receiver

**132** Optical output device

**38032** Distance calculator

**38033** Optical output controller

**38031** Map data storage

# FIG. 39

```
                    ┌─────────┐
                    │  START  │
                    └────┬────┘
                         ▼
                       ╱   ╲
         S3901      ╱ Positional ╲    N
              ────╱    data      ╲──────┐
                  ╲  received?   ╱      │
                    ╲         ╱         │
                      ╲   ╱             │
                       │ Y             │
                       ▼               │
         S3902  ┌──────────────┐       │
              ──│ Take positional data │
                └──────┬───────┘       │
                       ▼               │
         S3903  ┌──────────────────┐   │
              ──│ Compose external info │
                └──────┬───────────┘   │
                       ▼               │
         S3904  ┌────────────────────────┐
              ──│ Retrieve originator identifier │
                └──────┬─────────────────┘
                       ▼               │
         S3905  ┌───────────────────────┐
              ──│ Retrieve repeater identifier │
                └──────┬────────────────┘
                       ▼               │
         S3906  ┌───────────────────────┐
              ──│ Transmit external info and │
                │   originator identifier │
                └──────┬────────────────┘
                       ▼               │
                     ╱   ╲             │
         S3907     ╱       ╲           │
              N  ╱ End signal? ╲───────┘
              ──╲            ╱
                  ╲       ╱
                    ╲   ╱
                     │ Y
                     ▼
                ┌─────────┐
                │   END   │
                └─────────┘
```

# FIG. 40

```
              ( START )
                  |
   S4001          v
        <  External info  > --N-->
        <   received?   >
                  |
   S4002          | Y
                  v
        [ Retrieve map data ]
                  |
   S4003          v
        [ Compute distance ]
                  |
   S4004          v
     [ Determine control parameter ]
                  |
   S4005          v
        [ Optical output ]
                  |
   S4006          v
   N <    End signal?   >
                  |
                  | Y
                  v
              ( END )
```

# FIG. 41

# FIG. 42

"ABC Railway Company - Distance Management Table for X-Line"

| Station Identifier | A Station | B Station | C Station | D Station | F Station |
|---|---|---|---|---|---|
| Distance | 0 | 5,2Km | 8,4Km | 10,3Km | 15,0Km |

nearest station: D station

# FIG. 43

4301

**Information processing terminal**

43011    External information acquirer

430111    Heart rate data acquiring section

430112    Body temperature data acquiring section

430113    Blood-sugar data acquiring section

430114    Blood pressure data acquiring section

112    Originator identifier storage

113    First external information transmitter

430115    Health condition data acquiring section

External information composing section

430116

12    Repeater unit

121    Second external information receiver

122    Transmission management information storage

124    Second external information transmitter

123    Destination identifier acquirer

13    Optical output unit

131    Third external information receiver

132    Optical output device

133    Optical output controller

# FIG. 44

START

S4401
Command for obtaining external info? — N

Y

S4402 Obtain heart rate data

S4403 Obtain body temperature data

S4404 Obtain blood-sugar data

S4405 Obtain blood pressure data

S4406 Calculate health condition data

S4407 Compose external info

S4408 Retrieve originator identifier

S4409 Retrieve repeater identifier

S4410 Transmit external info and originator identifier

END

# FIG. 45

# FIG. 46

| Score | Heart Rate | Body Temp | Blood Sugar Level | Blood Pressure |
|---|---|---|---|---|
| 0 | 91 or higher | 40.1 or higher | 151 or higher | Systolic pressure: (180 or higher)(70 or lower) Diastolic pressure: (130 to 140)(30 to 40) |
| 5 | 81 to 90 | 39.1 to 40.0 | 141 to 150 | Systolic pressure: (170 to 180)(70 to 80) Diastolic pressure: (120 to 130)(40 to 50) |
| 10 | 71 to 80 | 38.1 to 39.0 | 131 to 140 | Systolic pressure: (160 to 170)(80 to 90) Diastolic pressure: (110 to 120)(40 to 50) |
| 15 | 61 to 70 | 35.9 or lower 37.3 to 38.0 | 121 to 130 | Systolic pressure: (150 to 160)(90 to 100) Diastolic pressure: (100 to 110)(50 to 60) |
| 20 | 51 to 60 | 36.0 to 36.2 36.9 to 37.2 | 11 to 120 | Systolic pressure: (140 to 150)(100 to 110) Diastolic pressure: (90 to 100)(60 to 70) |
| 25 | 50 or lower | 36.3 to 36.8 | 110 or lower | Systolic pressure: (110 to 140) Diastolic pressure: (70 to 90) |

# FIG. 47

| | |
|---|---|
| < heart rate data> | 78 |
| < body temperature data> | 36.5 |
| < blood-sugar data> | 80 |
| < blood pressure data> | 133 over 70 |
| < health condition data> | 85 |

# FIG. 48

4801

**Information processing terminal**

48011    External information acquirer

112

Originator identifier storage

480111

pH data acquiring section

480112

External information composing section

113

First external information transmitter

12

**Repeater unit**

121

Second external information receiver

122

Transmission management information storage

124

Second external information transmitter

123

Destination identifier acquirer

13

**Optical output unit**

131

Third external information receiver

132

Optical output device

133

Optical output controller

# FIG. 49

START

1

S4901 — Obtain pH value

S4902 — Retrieve normal pH value

S4903 — Is difference greater than given value? —N→ 1

↓Y

S4904 — Compose external info

S4905 — Retrieve originator identifier

S4906 — Retrieve repeater identifier

S4907 — Transmit external info

S4908 — End signal? —N→ S4909 Wait for given time → 1

↓Y

END

# FIG. 50

5001

Information processing terminal

50011 External information acquirer

112
Originator identifier storage

500111
Angle data acquiring section

500112
External information composing section

113
First external information transmitter

12
Repeater unit

121
Second external information receiver

122
Transmission management information storage

124
Second external information transmitter

123
Destination identifier acquirer

13
Optical output unit

131
Third external information receiver

132
Optical output device

133
Optical output controller

# FIG. 51

```
                        ┌──────────┐
                        │  START   │
                        └──────────┘
                             │
        S5101                ▼
              ◇─────────────────────────◇
              │      Change in angle      │── N
              ◇       detected?          ◇
                   └───────────────┘
                         │ Y
        S5102            ▼
              ┌─────────────────────┐
              │   Obtain angle data  │
              └─────────────────────┘
                         │
     S5103               ▼
              ┌─────────────────────┐
              │  Compose external info│
              └─────────────────────┘
                         │
    S5104                ▼
              ┌──────────────────────────┐
              │ Retrieve originator identifier│
              └──────────────────────────┘
                         │
    S5105                ▼
              ┌──────────────────────────┐
              │ Retrieve repeater identifier │
              └──────────────────────────┘
                         │
    S5106                ▼
              ┌─────────────────────┐
              │  Transmit external info│
              └─────────────────────┘
                         │
       S5107             ▼
          N   ◇───────────────────◇
          ────│     End signal?     │
              ◇───────────────────◇
                         │ Y
                         ▼
                  ┌──────────┐
                  │   END    │
                  └──────────┘
```

# FIG. 52

# FIG. 53

5301

**Information processing terminal**

53011 External information acquirer

112

Originator identifier storage

530111

Rotational data acquiring section

530112

External information composing section

113

First external information transmitter

12

**Repeater unit**

122

Transmission management information storage

121

Second external information receiver

124

Second external information transmitter

123

Destination identifier acquirer

13

**Optical output unit**

131

Third external information receiver

132

Optical output device

133

Optical output controller

# FIG. 54

```
                    ┌─────────────┐
                    │    START    │
                    └──────┬──────┘
                           │
        ┌──────────────────┼──────────────────┐
        │                  ▼                   │
S5401                  ◇ Rotation ◇    N       │
                       ◇ detected? ◇ ──────────┘
                           │ Y
S5402                      ▼
                    ┌─────────────────┐
                    │ Obtain rotational data │
                    └─────────┬───────┘
S5403                         ▼
                    ┌─────────────────┐
                    │ Compose external info │
                    └─────────┬───────┘
S5404                         ▼
                    ┌─────────────────┐
                    │ Retrieve originator identifier │
                    └─────────┬───────┘
S5405                         ▼
                    ┌─────────────────┐
                    │ Retrieve repeater identifier │
                    └─────────┬───────┘
S5406                         ▼
                    ┌─────────────────┐
                    │ Transmit external info │
                    └─────────┬───────┘
S5407       N                 ▼
        ◇ End signal? ◇ ──────
                    │ Y
                    ▼
                ┌───────┐
                │  END  │
                └───────┘
```

# FIG. 55

5501

5301

12

13

# FIG. 56

**5601**

**Information processing terminal**

**56011** External information acquirer

**560111**

Electroencephalogram data acquiring section

**560112**

External information composing section

**112**

Originator identifier storage

**113**

First external information transmitter

**12** Repeater unit

**121**

Second external information receiver

**124**

Second external information transmitter

**122**

Transmission management information storage

**123**

Destination identifier acquirer

**13** Optical output unit

**131**

Third external information receiver

**132**

Optical output device

**133**

Optical output controller

# FIG. 57

```
                    ┌──────────┐
                    │  START   │
                    └────┬─────┘
                         │        ◄──────────┐
                         ▼                    │
 S5701          ╱◥◣ Command for ◥◣╲           │
           ────╱    taking eeg      ╲──── N ──┤
               ╲   measurement?    ╱          │
                ╲◤              ◢◤╱            │
                         │ Y                   │
                         ▼                     │
 S5702          ┌─────────────────┐           │
           ─────│  Obtain eeg data │          │
                └────────┬────────┘           │
 S5703                   ▼                    │
           ─────┌─────────────────┐           │
                │ Compose external info │     │
                └────────┬────────┘           │
 S5704                   ▼                    │
           ─────┌──────────────────────┐      │
                │ Retrieve originator identifier │ │
                └────────┬─────────────┘      │
 S5705                   ▼                    │
           ─────┌──────────────────────┐      │
                │ Retrieve repeater identifier │ │
                └────────┬─────────────┘      │
 S5706                   ▼                    │
           ─────┌──────────────────────┐      │
                │  Transmit external info │    │
                └────────┬─────────────┘      │
 S5707                   ▼                    │
           N    ╱◥◣ End signal? ◥◣╲           │
           ─────╲               ╱─────────────┘
                 ╲◤          ◢◤╱
                         │ Y
                         ▼
                    ┌──────────┐
                    │   END    │
                    └──────────┘
```

Reference Marks in the Drawings

11, 1301, 2801, 3601, 3801, 4301, 4801, 5001, 5301, 5601. Information processing terminal

12. Repeater unit

13, 1303, 2303, 2803, 3803. Optical output unit

111, 13011, 28011, 36011, 38011, 43011, 48011, 50011, 53011, 56011. External information acquirer

111A. Pressure sensor

112. Originator identifier storage

113. First external information transmitter

121. Second external information receiver

122. Transmission management information storage

123. Destination identifier acquirer

124. Second external information transmitter

130112A. GPS receiver

130331. Blue color LED

130312. Red color LED

13034. Second location data acquiring section

131. Third external information receiver

132, 13031, 28032. Optical output device

132A. Miniature lamp

132B. Three-colored LED

132C. Reflector

132D. Driving unit

132E, 28032A. Liquid crystal display

132F. Circular graphics

133, 13033, 23033, 28032, 28033, 38033. Optical output controller

133A, 133B. Voltage controller

13032, 23032. Mode data storage

28031. External information storage

28032B. LED

28032B1. LED at the right end

2804. Input unit

38031. Map data storage

38032. Distance calculator

4101. Train

4102. Information processing unit

130111. Pressure acquiring section

130112. Location data acquiring section

130113, 280113, 360112, 380112, 430116, 480112, 500112, 530112, 560112. External information composing section

130311. First optical output element

130312. Second optical output element

280111. Input signal receiving section

280112. Input speed data generating section

360111. CPU operating rate acquiring section

380111. Positional data acquiring section

430111. Heart rate data acquiring section

430112. Body temperature data acquiring section

430113. Blood-sugar data acquiring section

430114. Blood pressure data acquiring section

430115. Health condition data acquiring section

480111. pH data acquiring section

500111. Angle data acquiring section

530111. Rotational data acquiring section

5501. Windmill

560111. Electroencephalogram data acquiring section

## INTERNATIONAL SEARCH REPORT

| International application No. |
|---|
| PCT/JP03/02438 |

| A. CLASSIFICATION OF SUBJECT MATTER |
|---|
| Int.Cl$^7$  G08B5/36, G06F3/00 |

According to International Patent Classification (IPC) or to both national classification and IPC

| B. FIELDS SEARCHED |
|---|
| Minimum documentation searched (classification system followed by classification symbols) |
| Int.Cl$^7$  G08B5/36, G06F3/00 |

| Documentation searched other than minimum documentation to the extent that such documents are included in the fields searched |
|---|
| Jitsuyo Shinan Koho          1922–1996   Toroku Jitsuyo Shinan Koho    1994–2003 |
| Kokai Jitsuyo Shinan Koho    1971–2003   Jitsuyo Shinan Toroku Koho    1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2002-42292 A  (Akira ISHII),<br>08 February, 2002 (08.02.02),<br>Full text<br>(Family: none) | 1-6,8,9,28,<br>45-49<br>26,27,29-31 |
| X | US 5737248 A  (Semiconductor Energy Laboratory Co., Ltd.),<br>07 April, 1998 (07.04.98),<br>Column 7, line 49 to column 9, line 24; Fig. 3<br>& JP 8-106349 A<br>Par. Nos. [0022] to [0029]; Fig. 3 | 1,7,12 |
| X | JP 2786163 B  (Nihon Denki Idotsushin Kabushiki Kaisha),<br>29 May, 1998 (29.05.98),<br>Claim 3<br>(Family: none) | 1,10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 May, 2003 (06.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP03/02438 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP 6-191752 A (Hitachi, Ltd.),<br>12 July, 1994 (12.07.94),<br>Par. No. [0010]; Fig. 3<br>(Family: none) | 1,11,14,15<br>25,29,33,34,<br>44 |
| X<br>Y | JP 7-287693 A (Tec Co., Ltd.),<br>31 October, 1995 (31.10.95),<br>Par. No. [0022]<br>(Family: none) | 1,13<br>29,32 |
| X<br>Y | JP 2002-5770 A (Koganei Corp.),<br>09 January, 2002 (09.01.02),<br>Par. No. [0032]<br>(Family: none) | 1,16<br>29,35 |
| X<br>Y | JP 5-95921 A (Omron Corp.),<br>20 April, 1993 (20.04.93),<br>Par. No. [0008]<br>(Family: none) | 1,17<br>18-20,24,29,<br>36-39,43 |
| Y | Tomonori SHINAGAWA et al., "Network System-gata<br>Koreisha Seikatsu Shien System", Matsushita<br>Technical Journal, 18 August, 2000 (18.08.00),<br>Vol.46, No.4, pages 63 to 69 | 18-20,37-39 |
| X<br>Y | JP 4-41869 Y2 (Sanyo Electric Works, Ltd.),<br>01 October, 1992 (01.10.92),<br>Column 7, line 34 to column 8, line 1; Fig. 4<br>(Family: none) | 1,21<br>29,40 |
| X<br>Y | JP 2000-41554 A (Sanshiro TAKAMIYA),<br>15 February, 2000 (15.02.00),<br>Par. No. [0010]<br>(Family: none) | 1,22<br>29,41 |
| X<br>Y | JP 5-269407 A (Asahi Sanak Kabushiki Kaisha),<br>19 October, 1993 (19.10.93),<br>Claim 1<br>(Family: none) | 1,23<br>29,42 |
| Y | JP 61-15229 A (Toshiba Corp.),<br>23 January, 1986 (23.01.86),<br>Claims<br>(Family: none) | 24,43 |
| Y | JP 2001-167620 A (Yugen Kaisha Asuka),<br>22 June, 2001 (22.06.01),<br>Par. No. [0015]<br>(Family: none) | 25,44 |
| Y | JP 11-296482 A (Oki Electric Industry Co., Ltd.),<br>29 October, 1999 (29.10.99),<br>Par. Nos. [0008] to [0011]; Fig. 2<br>(Family: none) | 26 |

Form PCT/ISA/210 (continuation of second sheet) (July 1998)

## INTERNATIONAL SEARCH REPORT

| | International application No. |
|---|---|
| | PCT/JP03/02438 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-214412 A  (Seiko Instruments Inc.), 15 August, 1997 (15.08.97), Par. No. [0017] (Family: none) | 27 |
| Y | JP 2000-004235 A  (The Nippon Signal Co., Ltd.), 07 January, 2000 (07.01.00), Par. No. [0024]; Fig. 4 (Family: none) | 29-44 |

Form PCT/ISA/210 (continuation of second sheet) (July 1998)